# EUROPEAN PATENT APPLICATION

(11) **EP 4 618 519 A1**
(43) Date of publication of application: **17.09.2025**
(21) Application number: 23900099.5
(22) Date of filing: 09.12.2023
(51) Int. Cl.: H04L 69/14, H04L 69/06

(54) **MULTI-LINK COMMUNICATION METHOD AND DEVICE**

(30) Priority: 09.12.2022 CN 202211582012
(71) Applicant: Huawei Technologies Co., Ltd., Shenzhen, Guangdong 518129 (CN)
(72) Inventor: GUO, Yuchen, Shenzhen, Guangdong 518129 (CN); LI, Yunbo, Shenzhen, Guangdong 518129 (CN); GAN, Ming, Shenzhen, Guangdong 518129 (CN)
(74) Representative: Pfenning, Meinig & Partner mbB
(86) International application number: PCT/CN2023/137700
(87) International publication number: WO 2024/120531

(57) **Abstract**

A multi-link communication method and an apparatus are disclosed, are used in a wireless local area network system that supports 802.11 series protocols such as a next-generation Wi-Fi protocol of IEEE 802.11ax, for example, 802.11be, Wi-Fi 7, or EHT, and a next-generation protocol of 802.11be, for example, Wi-Fi 8, UHR, or Wi-Fi AI, and may be further used in an ultra-bandwidth-based wireless personal local area network system and a sensing (sensing) system. A transmit end sends a radio frame. Correspondingly, a receive end receives the radio frame, and parses the radio frame. The radio frame includes a first element and a second element. The first element includes an expected duration field. The expected duration field may be determined based on a most recent TBTT or TU boundary before a transmission time of the radio frame, or may be determined based on a TSF timer. This can ensure that an expected end time of a mapping relationship of the first element is the same as a time at which a mapping relationship of the second element is established.

## Description

This application claims priority to Chinese Patent Application No. 202211582012.0, filed with the China National Intellectual Property Administration on December 9, 2022 and entitled "MULTI-LINK COMMUNICATION METHOD AND APPARATUS", which is incorporated herein by reference in its entirety.

### TECHNICAL FIELD

This application relates to the field of communication technologies, and in particular, to a multi-link communication method and an apparatus.

### BACKGROUND

With development of wireless technologies, more wireless devices support multi-link communication. For example, the devices support simultaneous communication on a 2.4 GHz frequency band, a 5 GHz frequency band, a 6 GHz frequency band, and the like, or support communication on different channels on a same frequency band, to improve a communication rate between devices. The device is usually referred to as a multi-link device (multi-link device, MLD). The multi-link device may be an access point device, or a station device. A station device may communicate with an access point device after multi-link setup (or referred to as multi-link association).

In a multi-link setup (or multi-link association) process, a station in a multi-link station device may send an association request frame to an access point in a multi-link access point device. The association request frame carries a multi-link element (multi-link element, MLE) (or referred to as a multi-link information element) to carry information about the multi-link station device and information about another station in the device. Similarly, an association response frame returned by the access point to the station may also carry an MLE to carry information about the multi-link access point device and information about another access point in the device. In addition, to better manage traffic, traffic identifier (traffic ID, TID)-to-link mapping may be performed between multi-link devices to provide different services for different traffic. For example, unimportant traffic may be mapped to a part of links, and important traffic may be mapped to all links. Alternatively, different traffic is mapped to corresponding links based on rate and latency characteristics of different links.

However, in a process of switching a traffic identifier-to-link mapping manner, an effective time of a new mapping manner usually does not match an end time of an old mapping manner.

### SUMMARY

Embodiments of this application provide a multi-link communication method and an apparatus, to effectively ensure that an effective time of a new mapping manner matches an end time of an old mapping manner.

According to a first aspect, an embodiment of this application provides a multi-link communication method. The method includes:
generating a radio frame, where the radio frame includes a first traffic identifier-to-link mapping element and a second traffic identifier-to-link mapping element; the first traffic identifier-to-link mapping element includes an expected duration field; the expected duration field indicates an expected end time of a traffic identifier-to-link mapping relationship indicated by the first traffic identifier-to-link mapping element; the expected duration field is determined based on a most recent target beacon transmission time (target beacon transmission time, TBTT) before a transmission time of the radio frame, or determined based on a time synchronization function (time synchronization function, TSF) timer; the second traffic identifier-to-link mapping element includes a mapping switch time field; the mapping switch time field indicates a time at which a traffic identifier-to-link mapping relationship indicated by the second traffic identifier-to-link mapping element is established; and the expected end time of the traffic identifier-to-link mapping relationship indicated by the first traffic identifier-to-link mapping element is the same as the time at which the traffic identifier-to-link mapping relationship indicated by the second traffic identifier-to-link mapping element is established; and sending the radio frame.

In this embodiment of this application, the mapping switch time field in the second traffic identifier-to-link mapping element may be determined based on a TBTT of a future beacon frame (relative to the radio frame). Because a time difference between any two TBTTs on a link is in a unit of TU, when the expected end time indicated by the expected duration field is calculated by using the most recent TBTT before the transmission time of the radio frame as a starting point. This can effectively ensure that the expected end time can accurately indicate the establishment time indicated by the mapping switch time field in the second traffic identifier-to-link mapping element.

In this embodiment of this application, the time indicated by the expected duration field is changed to an absolute time, for example, is set to a system time at an end of the mapping relationship indicated by the first traffic identifier-to-link mapping element. This can effectively ensure that the expected end time indicated by the expected duration field in the first traffic identifier-to-link mapping element can indicate the establishment time indicated by the mapping switch time field in the second traffic identifier-to-link mapping element.

In a possible implementation, the expected duration field carries a same value as any one of the following: a value of an 11^{th} bit to a 26^{th} bit of the TSF timer; a value of an 11^{th} bit to a 34^{th} bit of the TSF timer; or a value of an 11^{th} bit to a 50^{th} bit of the TSF timer.

In this embodiment of this application, the expected duration field in the second traffic identifier-to-link mapping element may be determined based on a TBTT of a future beacon frame, for example, set to the value of the 11^{th} bit to the 26^{th} bit of the TSF timer. Therefore, the expected duration field in the first traffic identifier-to-link mapping element is set to the value of the 11^{th} bit to the 26^{th} bit, the value of the 11^{th} bit to the 34^{th} bit, or the like of the TSF timer. This can effectively ensure that the expected end time of the mapping relationship indicated by the first traffic identifier-to-link mapping element can be the same as the time at which the mapping relationship indicated by the second traffic identifier-to-link mapping element is established.

In a possible implementation, the first traffic identifier-to-link mapping element is located before the second traffic identifier-to-link mapping element in the radio frame.

In this embodiment of this application, after a sequence of the first traffic identifier-to-link mapping element and the second traffic identifier-to-link mapping element is fixed, a receive end can parse different elements based on the sequence of the two elements, to quickly learn of the time at which the mapping relationship indicated by the second traffic identifier-to-link mapping element is established and the expected end time of the mapping relationship indicated by the first traffic identifier-to-link mapping element.

According to a second aspect, an embodiment of this application provides a multi-link communication method. The method includes:
receiving a radio frame, where the radio frame includes a first traffic identifier-to-link mapping element and a second traffic identifier-to-link mapping element; the first traffic identifier-to-link mapping element includes an expected duration field; the expected duration field indicates an expected end time of a traffic identifier-to-link mapping relationship indicated by the first traffic identifier-to-link mapping element; the expected duration field is determined based on a most recent target beacon transmission time TBTT before a transmission time of the radio frame, or determined based on a time synchronization function TSF timer; the second traffic identifier-to-link mapping element includes a mapping switch time field; the mapping switch time field indicates a time at which a traffic identifier-to-link mapping relationship indicated by the second traffic identifier-to-link mapping element is established; and the expected end time of the traffic identifier-to-link mapping relationship indicated by the first traffic identifier-to-link mapping element is the same as the time at which the traffic identifier-to-link mapping relationship indicated by the second traffic identifier-to-link mapping element is established; and parsing the radio frame.

In a possible implementation, the parsing the radio frame includes:
determining, by using the most recent TBTT before the transmission time of the radio frame as a starting point and using a value carried in the expected duration field as duration, the expected end time of the traffic identifier-to-link mapping relationship indicated by the first traffic identifier-to-link mapping element; or using a value carried in the expected duration field as the expected end time of the traffic identifier-to-link mapping relationship indicated by the first traffic identifier-to-link mapping element.

In a possible implementation, the expected duration field carries a same value as any one of the following:
a value of an 11^{th} bit to a 26^{th} bit of the TSF timer, a value of an 11^{th} bit to a 34^{th} bit of the TSF timer, or a value of an 11^{th} bit to a 50^{th} bit of the TSF timer.

In a possible implementation, the first traffic identifier-to-link mapping element is located before the second traffic identifier-to-link mapping element in the radio frame.

It may be understood that, for beneficial effect of the second aspect, refer to the first aspect.

According to a third aspect, an embodiment of this application provides a multi-link communication method. The method includes:
generating a radio frame, where the radio frame includes a first traffic identifier-to-link mapping element and a second traffic identifier-to-link mapping element; the first traffic identifier-to-link mapping element does not include an expected duration field, the second traffic identifier-to-link mapping element includes a mapping switch time field, and the mapping switch time field indicates a time at which a traffic identifier-to-link mapping relationship indicated by the second traffic identifier-to-link mapping element is established and an expected end time of a traffic identifier-to-link mapping relationship indicated by the first traffic identifier-to-link mapping element; or the first traffic identifier-to-link mapping element includes an expected duration field, the second traffic identifier-to-link mapping element does not include a mapping switch time field, and the expected duration field indicates an expected end time of a traffic identifier-to-link mapping relationship indicated by the first traffic identifier-to-link mapping element and a time at which a traffic identifier-to-link mapping relationship indicated by the second traffic identifier-to-link mapping element is established; and sending the radio frame.

In this embodiment of this application, the first traffic identifier-to-link mapping element does not include the expected duration field, and the second traffic identifier-to-link mapping element includes the mapping switch time field. Therefore, the mapping switch time field may indicate the time at which the mapping relationship indicated by the second traffic identifier-to-link mapping element is established, and may indicate the expected end time of the mapping relationship indicated by the first traffic identifier-to-link mapping element. For example, the expected end time of the mapping relationship indicated by the first traffic identifier-to-link mapping element may be equal to, by default, the time at which the mapping relationship indicated by the second traffic identifier-to-link mapping element is established. This effectively ensures that the expected end time of the mapping relationship indicated by the first traffic identifier-to-link mapping element is the same as the time at which the mapping relationship indicated by the second traffic identifier-to-link mapping element is established.

In this embodiment of this application, the first traffic identifier-to-link mapping element includes the expected duration field, and the second traffic identifier-to-link mapping element does not include the mapping switch time field. Therefore, the expected duration field may indicate the expected end time of the mapping relationship indicated by the first traffic identifier-to-link mapping element, and may indicate the time at which the mapping relationship indicated by the second traffic identifier-to-link mapping element is established. For example, the time at which the mapping relationship indicated by the second traffic identifier-to-link mapping element is established may be equal to, by default, the expected end time of the mapping relationship indicated by the first traffic identifier-to-link mapping element. This effectively ensures that the expected end time of the mapping relationship indicated by the first traffic identifier-to-link mapping element is the same as the time at which the mapping relationship indicated by the second traffic identifier-to-link mapping element is established.

In a possible implementation, the first traffic identifier-to-link mapping element is located before the second traffic identifier-to-link mapping element in the radio frame.

According to a fourth aspect, an embodiment of this application provides a multi-link communication method. The method includes:
receiving a radio frame, where the radio frame includes a first traffic identifier-to-link mapping element and a second traffic identifier-to-link mapping element; the first traffic identifier-to-link mapping element does not include an expected duration field, the second traffic identifier-to-link mapping element includes a mapping switch time field, and the mapping switch time field indicates a time at which a traffic identifier-to-link mapping relationship indicated by the second traffic identifier-to-link mapping element is established and an expected end time of a traffic identifier-to-link mapping relationship indicated by the first traffic identifier-to-link mapping element; or the first traffic identifier-to-link mapping element includes an expected duration field, the second traffic identifier-to-link mapping element does not include a mapping switch time field, and the expected duration field indicates an expected end time of a traffic identifier-to-link mapping relationship indicated by the first traffic identifier-to-link mapping element and a time at which a traffic identifier-to-link mapping relationship indicated by the second traffic identifier-to-link mapping element is established ; and parsing the radio frame.

In a possible implementation, the parsing the radio frame includes:
when the first traffic identifier-to-link mapping element does not include the expected duration field and the second traffic identifier-to-link mapping element includes the mapping switch time field, determining, based on the mapping switch time field, the expected end time of the traffic identifier-to-link mapping relationship indicated by the first traffic identifier-to-link mapping element, where the expected end time of the traffic identifier-to-link mapping relationship indicated by the first traffic identifier-to-link mapping element is the same as the time at which the traffic identifier-to-link mapping relationship indicated by the second traffic identifier-to-link mapping element is established; or
when the first traffic identifier-to-link mapping element includes the expected duration field and the second traffic identifier-to-link mapping element does not include the mapping switch time field, determining, based on the expected duration field, the time at which the traffic identifier-to-link mapping relationship indicated by the second traffic identifier-to-link mapping element is established, where the expected end time of the traffic identifier-to-link mapping relationship indicated by the first traffic identifier-to-link mapping element is the same as the time at which the traffic identifier-to-link mapping relationship indicated by the second traffic identifier-to-link mapping element is established.

In a possible implementation, the first traffic identifier-to-link mapping element is located before the second traffic identifier-to-link mapping element in the radio frame.

It may be understood that, for beneficial effect of the fourth aspect, refer to the third aspect.

According to a fifth aspect, an embodiment of this application provides a multi-link communication method. The method includes:
receiving a radio frame, where the radio frame includes a first traffic identifier-to-link mapping element and a second traffic identifier-to-link mapping element, the first traffic identifier-to-link mapping element includes an expected duration field, the expected duration field indicates an expected end time of a traffic identifier-to-link mapping relationship indicated by the first traffic identifier-to-link mapping element, the second traffic identifier-to-link mapping element includes a mapping switch time field, and the mapping switch time field indicates a time at which a traffic identifier-to-link mapping relationship indicated by the second traffic identifier-to-link mapping element is established; and determining, based on the expected duration field, the time at which the traffic identifier-to-link mapping relationship indicated by the second traffic identifier-to-link mapping element is established; or determining, based on the mapping switch time field, the expected end time of the traffic identifier-to-link mapping relationship indicated by the first traffic identifier-to-link mapping element.

In this embodiment of this application, although the first traffic identifier-to-link mapping element includes the expected duration field, and the second traffic identifier-to-link mapping element includes the mapping switch time field, when the expected end time indicated by the expected duration field does not match the establishment time indicated by the mapping switch time field, a receive end may use, based on one of the expected duration field or the mapping switch time field, the time at which the mapping relationship indicated by the second traffic identifier-to-link mapping element is established and the expected end time of the mapping relationship indicated by the first traffic identifier-to-link mapping element. This effectively ensures that the expected end time of the mapping relationship indicated by the first traffic identifier-to-link mapping element is the same as the time at which the mapping relationship indicated by the second traffic identifier-to-link mapping element is established.

In a possible implementation, the determining, based on the mapping switch time field, the expected end time of the traffic identifier-to-link mapping relationship indicated by the first traffic identifier-to-link mapping element includes:
when the expected end time of the traffic identifier-to-link mapping relationship indicated by the first traffic identifier-to-link mapping element is later than the time at which the traffic identifier-to-link mapping relationship indicated by the second traffic identifier-to-link mapping element is established, determining, based on the mapping switch time field, the expected end time of the traffic identifier-to-link mapping relationship indicated by the first traffic identifier-to-link mapping element, where the expected end time of the traffic identifier-to-link mapping relationship indicated by the first traffic identifier-to-link mapping element is equal to the time at which the traffic identifier-to-link mapping relationship indicated by the second traffic identifier-to-link mapping element is established.

In a possible implementation, the first traffic identifier-to-link mapping element is located before the second traffic identifier-to-link mapping element in the radio frame.

According to a sixth aspect, an embodiment of this application provides a multi-link communication method. The method includes:
generating a radio frame, where the radio frame includes a traffic identifier-to-link mapping element; the traffic identifier-to-link mapping element includes a mapping switch time field and a first field; the mapping switch time field indicates a time at which a traffic identifier-to-link mapping relationship indicated by the traffic identifier-to-link mapping element is established; the time is determined based on a first target beacon time TBTT on a first link; the first field indicates a time difference between the first TBTT on the first link and a time point that is on a second link and that corresponds to the first TBTT; the time point is not later than the first TBTT and is a time point that is on the second link and that is closest to the first TBTT, and a value of 10 least significant bits of a time synchronization function TSF timer of the time point is 0; or the time point is a TBTT on the second link; and sending the radio frame through the second link.

In this embodiment of this application, the radio frame includes the time difference between the first TBTT on the first link and the corresponding time point on the second link, so that when the time at which the mapping relationship is established is determined based on the TBTT on the first link, a receive end on the second link can still accurately determine, based on the radio frame, the time at which the mapping relationship corresponding to the second link is established.

In a possible implementation, the traffic identifier-to-link mapping element further includes a second field, and the second field indicates presence of the first field.

In a possible implementation, a value carried in the first field is a value of a first bit to a tenth bit of the time synchronization function TSF timer of a basic service set BSS corresponding to the second link.

According to a seventh aspect, an embodiment of this application provides a multi-link communication method. The method includes:
receiving a radio frame through a second link, where the radio frame includes a traffic identifier-to-link mapping element; the traffic identifier-to-link mapping element includes a mapping switch time field and a first field; the mapping switch time field indicates a time at which a traffic identifier-to-link mapping relationship indicated by the traffic identifier-to-link mapping element is established; the time is determined based on a first target beacon time TBTT on a first link; the first field indicates a time difference between the first TBTT on the first link and a time point that is on the second link and that corresponds to the first TBTT; the time point is not later than the first TBTT and is a time point that is on the second link and that is closest to the first TBTT, and a value of 10 least significant bits of a time synchronization function TSF timer of the time point is 0; or the time point is a TBTT on the second link; and parsing the radio frame.

In a possible implementation, the parsing the radio frame includes:
determining, based on the first field and the time indicated by the mapping switch time field, a time at which a traffic identifier-to-link mapping relationship corresponding to the second link is established.

In a possible implementation, the traffic identifier-to-link mapping element further includes a second field, and the second field indicates presence of the first field.

In a possible implementation, a value carried in the first field is a value of a first bit to a tenth bit of the time synchronization function TSF timer of a basic service set BSS corresponding to the second link.

It may be understood that, for beneficial effect of the seventh aspect, refer to the sixth aspect.

According to an eighth aspect, an embodiment of this application provides a multi-link communication method. The method includes:
generating a radio frame, where the radio frame includes a traffic identifier-to-link mapping element, the traffic identifier-to-link mapping element includes a mapping switch time field, the mapping switch time field indicates a time at which a traffic identifier-to-link mapping relationship indicated by the traffic identifier-to-link mapping element is established, and time precision of the time is microsecond; and sending the radio frame.

In this embodiment of this application, when the time precision of the establishment time indicated by the mapping switch time field is changed to µs, even if the time at which the mapping relationship is established is determined based on a TBTT on a first link, a receive end on a second link can still accurately determine, based on the radio frame, the time at which the mapping relationship corresponding to the second link is established.

In a possible implementation, the traffic identifier-to-link mapping element further includes a length field, the length field indicates a length of the mapping switch time field, and the time precision of the time is microsecond when a value carried in the length field is a first value.

According to a ninth aspect, an embodiment of this application provides a multi-link communication method. The method includes:
receiving a radio frame, where the radio frame includes a traffic identifier-to-link mapping element, the traffic identifier-to-link mapping element includes a mapping switch time field, the mapping switch time field indicates a time at which a traffic identifier-to-link mapping relationship indicated by the traffic identifier-to-link mapping element is established, and time precision of the time is microsecond; and parsing the radio frame.

In a possible implementation, the parsing the radio frame includes:
determining, based on a value carried in the mapping switch time field, the time at which the traffic identifier-to-link mapping relationship is established.

In a possible implementation, the traffic identifier-to-link mapping element further includes a length field, the length field indicates a length of the mapping switch time field, and the time precision of the time is microsecond when a value carried in the length field is a first value.

According to a tenth aspect, an embodiment of this application provides a communication apparatus, configured to perform the method in any one of the first aspect or the possible implementations of the first aspect. The communication apparatus includes units that perform the method in any one of the first aspect or the possible implementations of the first aspect.

According to an eleventh aspect, an embodiment of this application provides a communication apparatus, configured to perform the method in any one of the second aspect or the possible implementations of the second aspect. The communication apparatus includes units that perform the method in any one of the second aspect or the possible implementations of the second aspect.

According to a twelfth aspect, an embodiment of this application provides a communication apparatus, configured to perform the method in any one of the third aspect or the possible implementations of the third aspect. The communication apparatus includes units that perform the method in any one of the third aspect or the possible implementations of the third aspect.

According to a thirteenth aspect, an embodiment of this application provides a communication apparatus, configured to perform the method in any one of the fourth aspect or the possible implementations of the fourth aspect. The communication apparatus includes units that perform the method in any one of the fourth aspect or the possible implementations of the fourth aspect.

According to a fourteenth aspect, an embodiment of this application provides a communication apparatus, configured to perform the method in any one of the fifth aspect or the possible implementations of the fifth aspect. The communication apparatus includes units that perform the method in any one of the fifth aspect or the possible implementations of the fifth aspect.

According to a fifteenth aspect, an embodiment of this application provides a communication apparatus, configured to perform the method in any one of the sixth aspect or the possible implementations of the sixth aspect. The communication apparatus includes units that perform the method in any one of the sixth aspect or the possible implementations of the sixth aspect.

According to a sixteenth aspect, an embodiment of this application provides a communication apparatus, configured to perform the method in any one of the seventh aspect or the possible implementations of the seventh aspect. The communication apparatus includes units that perform the method in any one of the seventh aspect or the possible implementations of the seventh aspect.

According to a seventeenth aspect, an embodiment of this application provides a communication apparatus, configured to perform the method in any one of the eighth aspect or the possible implementations of the eighth aspect. The communication apparatus includes units that perform the method in any one of the eighth aspect or the possible implementations of the eighth aspect.

According to an eighteenth aspect, an embodiment of this application provides a communication apparatus, configured to perform the method in any one of the ninth aspect or the possible implementations of the ninth aspect. The communication apparatus includes units that perform the method in any one of the ninth aspect or the possible implementations of the ninth aspect.

In the tenth aspect to the eighteenth aspect, the communication apparatus may include a transceiver unit and a processing unit. For specific descriptions of the transceiver unit and the processing unit, refer to the apparatus embodiments shown below.

According to a nineteenth aspect, an embodiment of this application provides a communication apparatus. The communication apparatus includes a processor, configured to perform the method in any one of the first aspect to the ninth aspect or the possible implementations of the first aspect to the ninth aspect. Alternatively, the processor is configured to execute a program stored in a memory. When the program is executed, the method in any one of the first aspect to the ninth aspect or the possible implementations of the first aspect to the ninth aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to receive a signal or send a signal.

According to a twentieth aspect, an embodiment of this application provides a communication apparatus. The communication apparatus includes a logic circuit and an interface. The logic circuit is coupled to the interface. The logic circuit is configured to generate a radio frame. The interface is configured to output the radio frame.

According to a twenty-first aspect, an embodiment of this application provides a communication apparatus. The communication apparatus includes a logic circuit and an interface. The logic circuit is coupled to the interface. The interface is configured to input a radio frame. The logic circuit is configured to process the radio frame.

For specific descriptions of the twentieth aspect and the twenty-first aspect, refer to the method embodiments shown below.

According to a twenty-second aspect, an embodiment of this application provides a computer-readable storage medium. The computer-readable storage medium is configured to store a computer program, and when the computer program is run on a computer, the method in any one of the first aspect to the ninth aspect or the possible implementations of the first aspect to the ninth aspect is performed.

According to a twenty-third aspect, an embodiment of this application provides a computer program product. The computer program product includes a computer program, and when the computer program is run on a computer, the method in any one of the first aspect to the ninth aspect or the possible implementations of the first aspect to the ninth aspect is performed.

According to a twenty-fourth aspect, an embodiment of this application provides a computer program. When the computer program is run on a computer, the method in any one of the first aspect to the ninth aspect or the possible implementations of the first aspect to the ninth aspect is performed.

According to a twenty-fifth aspect, an embodiment of this application provides a wireless communication system, where the wireless communication system includes a transmit end and a receive end, the transmit end is configured to perform the method in any one of the first aspect or the possible implementations of the first aspect, and the receive end is configured to perform the method in any one of the second aspect or the possible implementations of the second aspect; the transmit end is configured to perform the method in any one of the third aspect or the possible implementations of the third aspect, and the receive end is configured to perform the method in any one of the fourth aspect or the possible implementations of the fourth aspect; the receive end is configured to perform the method in any one of the fifth aspect or the possible implementations of the fifth aspect; the transmit end is configured to perform the method in any one of the sixth aspect or the possible implementations of the sixth aspect, and the receive end is configured to perform the method in any one of the seventh aspect or the possible implementations of the seventh aspect; or the transmit end is configured to perform the method in any one of the eighth aspect or the possible implementations of the eighth aspect, and the receive end is configured to perform the method in any one of the ninth aspect or the possible implementations of the ninth aspect.

### BRIEF DESCRIPTION OF DRAWINGS

FIG. 1 is a diagram of an architecture of a communication system according to an embodiment of this application;
FIG. 2a is a diagram of a manner of connection between a multi-link AP and a multi-link STA according to an embodiment of this application;
FIG. 2b is a diagram of a manner of connection between a multi-link AP and a multi-link STA according to an embodiment of this application;
FIG. 2c is a diagram of an antenna of a multi-link device according to an embodiment of this application;
FIG. 3a is a diagram of a communication scenario according to an embodiment of this application;
FIG. 3b is a diagram of a communication scenario according to an embodiment of this application;
FIG. 4a is a diagram of a structure of a traffic identifier-to-link mapping element according to an embodiment of this application;
FIG. 4b is a diagram of a timeline according to an embodiment of this application;
FIG. 5 is a schematic flowchart of a multi-link communication method according to an embodiment of this application;
FIG. 6a is a diagram of a timeline according to an embodiment of this application;
FIG. 6b-1 and FIG. 6b-2 are a diagram of a structure of a traffic identifier-to-link mapping element according to an embodiment of this application;
FIG. 6c-1 and FIG. 6c-2 are a diagram of a structure of a traffic identifier-to-link mapping element according to an embodiment of this application;
FIG. 6d-1 and FIG. 6d-2 are a diagram of a structure of a traffic identifier-to-link mapping element according to an embodiment of this application;
FIG. 6e-1 and FIG. 6e-2 are a diagram of a structure of a traffic identifier-to-link mapping element according to an embodiment of this application;

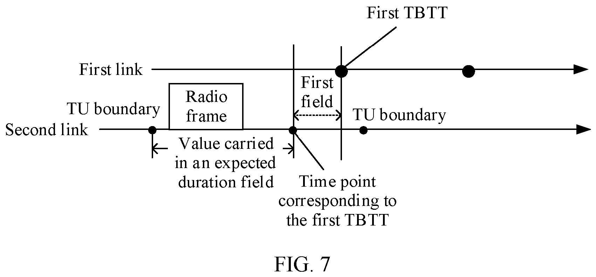

FIG. 7 is a diagram of a timeline according to an embodiment of this application;

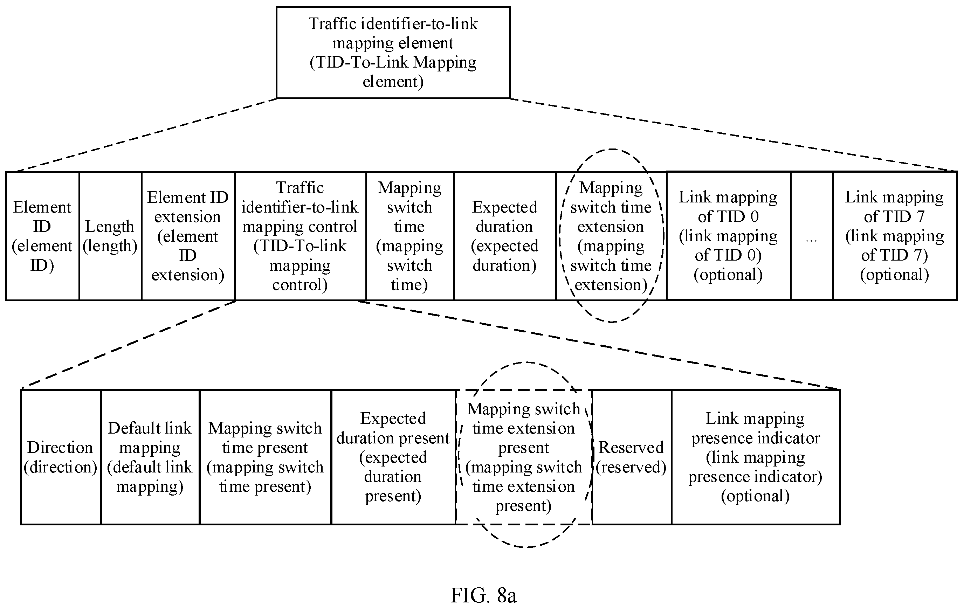

FIG. 8a is a diagram of a structure of a traffic identifier-to-link mapping element according to an embodiment of this application;

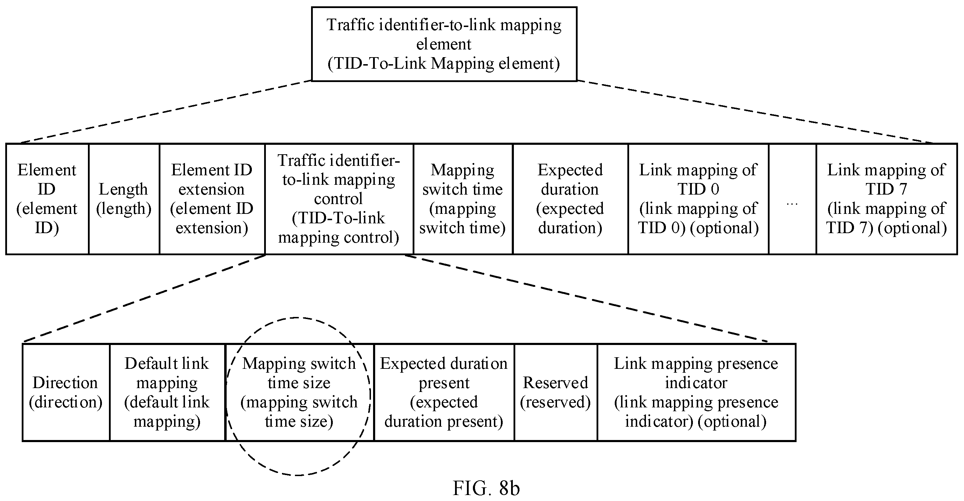

FIG. 8b is a diagram of a structure of a traffic identifier-to-link mapping element according to an embodiment of this application;

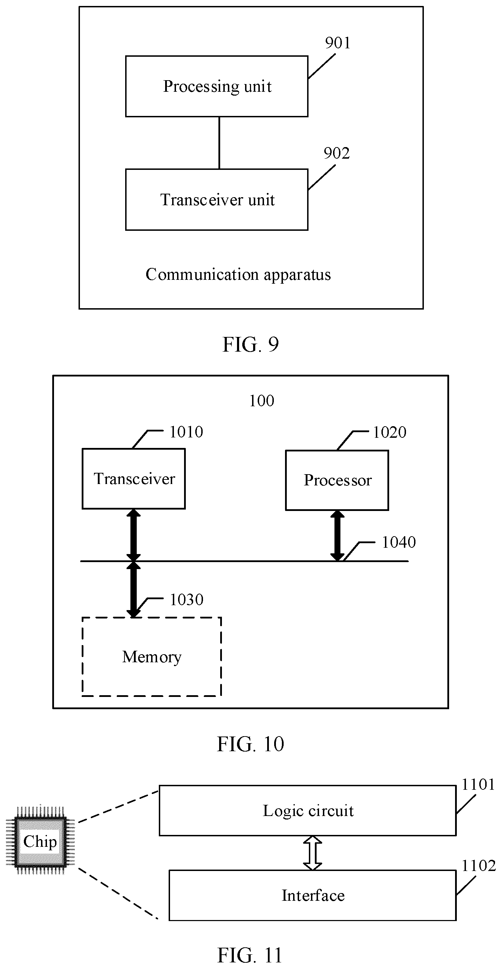

FIG. 9 is a diagram of a structure of a communication apparatus according to an embodiment of this application;
FIG. 10 is a diagram of a structure of a communication apparatus according to an embodiment of this application; and
FIG. 11 is a diagram of a structure of a communication apparatus according to an embodiment of this application.

### DESCRIPTION OF EMBODIMENTS

For ease of understanding technical solutions of this application, this application is further described with reference to accompanying drawings below.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units is not limited to listed steps or units, but instead, optionally further include steps or units that are not listed, or optionally further include other steps or units inherent to these processes, methods, products, or devices.

An "embodiment" mentioned in this specification means that a specific feature, structure, or characteristic described with reference to an embodiment may be included in at least one embodiment of this application. The phrase shown at various locations in the specification may not necessarily mean a same embodiment, and is not an independent or alternative embodiment exclusive from another embodiment. It may be explicitly and implicitly understood by a person skilled in the art that embodiments described in the specification may be combined with another embodiment.

In this application, "at least one piece (item)" means one or more, "a plurality of" means two or more, "at least two pieces (items)" means two, three, or more, and "and/or" is used to describe an association relationship between associated objects and indicates that three relationships may exist. For example, "A and/or B" may indicate the following three cases: Only A exists, only B exists, and both A and B exist, where A and B may be singular or plural. "Or" indicates that two relationships may exist. For example, only A exists and only B exists. If A and B are not mutually exclusive, it indicates that three relationships exist. For example, only A exists, only B exists, and both A and B exist. The character "/" usually indicates an "or" relationship between the associated objects. "At least one item (piece) of the following" or a similar expression thereof means any combination of these items. For example, at least one item (piece) of a, b, or c may indicate a, b, c, "a and b", "a and c", "b and c", or "a, b, and c".

The technical solutions provided in embodiments of this application may be applied to a WLAN system, for example, Wi-Fi. The method provided in embodiments of this application is applicable to IEEE 802.11 series protocols, for example, the 802.11a/b/g protocol, the 802.11n protocol, the 802.11ac protocol, the 802.11ax protocol, the 802.11be protocol, or a next-generation protocol. Examples are not enumerated herein. The technical solutions provided in embodiments of this application may be further applied to a wireless personal area network (wireless personal area network, WPAN) based on a UWB technology. The method provided in embodiments of this application is applicable to IEEE802.15 series protocol, for example, the 802.15.4a protocol, the 802.15.4z protocol, the 802.15.4ab protocol, or a future-generation UWB WPAN protocol. Examples are not enumerated herein. The technical solutions provided in embodiments of this application may be further applied to other communication systems, for example, an internet of things (internet of things, IoT) system, a vehicle-to-X (vehicle-to-X, V2X) system, and a narrow band internet of things (narrow band internet of things, NB-IoT) system, may be applied to a device in an internet of vehicles, an internet of things node, a sensor, and the like in an internet of things (internet of things, IoT), a smart camera, a smart remote control, and a smart water or electricity meter in a smart home, a sensor in a smart city, and the like, or may be further applied to a long term evolution (long term evolution, LTE) system, a 5th generation (5th generation, 5G) communication system, a new communication system emerging in future communication development, and the like.

The WLAN system can provide high-rate and low-latency transmission. With continuous evolution of WLAN application scenarios, the WLAN system is to be applied to more scenarios or industries, for example, the internet of things industry, the internet of vehicles industry, the banking industry, enterprise offices, exhibition halls of stadiums, concert halls, hotel rooms, dormitories, wards, classrooms, supermarkets, squares, streets, production workshops and warehousing. Certainly, a device (for example, an access point or a station) that supports WLAN communication or sensing may be a sensor node (for example, a smart water meter, a smart electricity meter, or a smart air detection node) in a smart city, a smart device (for example, a smart camera, a projector, a display, a television, a stereo, a refrigerator, or a washing machine) in a smart home, a node in an internet of things, an entertainment terminal (for example, a wearable device such as augmented reality (augmented reality, AR) or virtual reality (virtual reality, VR)), a smart device (for example, a printer, a projector, a loudspeaker, or a stereo) in smart office, an internet of vehicles device in an internet of vehicles, an infrastructure (for example, a vending machine, a self-service navigation console of a supermarket, a self-service cash register device, or a self-service ordering machine) in a daily life scenario, a device in a large sports and music venue, and the like. For example, the access point and the station may be devices used in an internet of vehicles, an internet of things node, a sensor, or the like in an internet of things, a smart camera, a smart remote control, and a smart water or electricity meter in a smart home, a sensor in a smart city, or the like.

Although embodiments of this application are mainly described by using a WLAN as an example, especially a network applied to IEEE 802.11 series standards, for example, a system that supports Wi-Fi 7 and may also be referred to as an extremely high throughput (extremely high throughput, EHT) system, or a system that supports Wi-Fi 8 and may also be referred to as an ultra high reliability (ultra high reliability, UHR) system or an ultra high reliability and throughput (ultra high reliability and throughput, UHRT) system. A person skilled in the art easily understands that various aspects in embodiments of this application may be extended to other networks that use various standards or protocols, for example, Bluetooth (Bluetooth), a high-performance radio LAN (high-performance radio LAN, HIPERLAN) (a wireless standard similar to the IEEE 802.11 standard, mainly used in Europe) and a wide area network (WAN) or another network that is known or developed in future. Therefore, regardless of a used coverage area and a used wireless access protocol, the various aspects provided in embodiments of this application are applicable to any suitable wireless network.

The multi-link device includes one or more affiliated stations. The affiliated station is a logical station, and may operate on one link, one frequency band, one channel, or the like. The affiliated station may be an AP or a non-AP STA. For ease of description, in embodiments of this application, a multi-link device whose affiliated station is an AP may be referred to as a multi-link AP, a multi-link AP device, or an AP multi-link device (AP multi-link device, AP MLD). A multi-link device whose affiliated station is a non-AP STA is referred to as a multi-link STA, a multi-link STA device, or a STA multi-link device (STA multi-link device), or a multi-link device whose affiliated station is a non-AP STA is referred to as a multi-link non-AP, a multi-link non-AP device, a non-AP multi-link device (non-AP multi-link device, non-AP MLD), or the like. The multi-link device (which may be a non-AP MLD or an AP MLD herein) is a communication apparatus having a wireless communication function. The communication apparatus may be an entire device, or may be a chip, a processing system, or the like installed in the entire device. The device in which the chip or the processing system is installed may implement the method and function in embodiments of this application under control of the chip or the processing system.

The multi-link device MLD may implement wireless communication in compliance with 802.11 series protocols, for example, in compliance with an extremely high throughput (Extremely High Throughput, EHT) protocol, or in compliance with an 802.11be-based or 802.11be-compatible protocol, thereby implementing communication with another device. Certainly, the another device may be a multi-link device or may not be a multi-link device.

Each logical station may operate on one link, and a plurality of logical stations are allowed to operate on a same link. A link identifier may represent one station operating on one link. In other words, if there is more than one logical station on one link, more than one link identifier may represent the logical stations. The link identifier sometimes also indicates a station operating on the link. If data transmission is performed between a multi-link device and another multi-link device, before communication, the multi-link device and the another multi-link device may first negotiate or communicate with each other about a correspondence between a link identifier and a link or a station on a link, or an AP multi-link device indicates a correspondence between a link identifier and a link or a station on a link based on a broadcast management frame, for example, a beacon frame. Therefore, during data transmission, the link identifier can be carried without transmitting a large amount of signaling to indicate the link or the station on the link. This reduces signaling overheads and improves transmission efficiency.

The following uses an example in which the foregoing one multi-link device is an AP multi-link device and the foregoing another multi-link device is a STA multi-link device for description. In an example, a management frame, for example, a multi-link probe response (probe response) frame, sent when the AP multi-link device establishes a basic service set (basic service set, BSS) carries one or more link elements, and a link information field included in the multi-link element may be used to establish a correspondence between a link identifier and a station operating on a corresponding link.

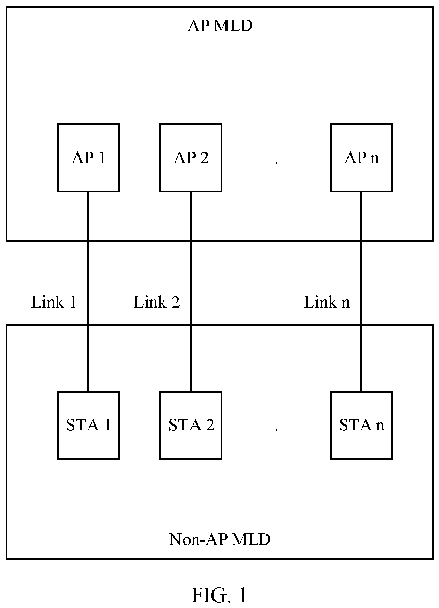

FIG. 1 is a diagram of an architecture of a communication system according to an embodiment of this application. As shown in FIG. 1, an AP MLD includes an AP 1, an AP 2, ..., and an AP n. A non-AP MLD includes a STA 1, a STA 2, ..., and a STA n. Herein, n is a positive integer. The AP MLD and the non-AP MLD may perform parallel communication on a link 1, a link 2, ..., and a link n. The STA 1 in the non-AP MLD establishes an association relationship with the AP 1 in the AP MLD. The STA 2 in the non-AP MLD establishes an association relationship with the AP 2 in the AP MLD. The STA n in the non-AP MLD establishes an association relationship with the AP n in the AP MLD. Therefore, one or more STAs in the non-AP MLD and one or more APs in the AP MLD may communicate after establishing an association relationship. A frequency band on which a multi-link device (including an AP MLD and a non-AP MLD) operates may include but is not limited to sub 1 GHz, 2.4 GHz, 5 GHz, 6 GHz, and high-frequency 60 GHz. For example, the method provided in embodiments of this application is applicable to, but is not limited to single-user uplink/downlink transmission, multi-user uplink/downlink transmission, vehicle-to-everything (vehicle-to-everything, V2X, where X may represent anything) communication, and device-to-device (device-to-device, D2D) communication. For example, the V2X communication may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, vehicle-to-network (vehicle-to-network, V2N) communication, or the like.

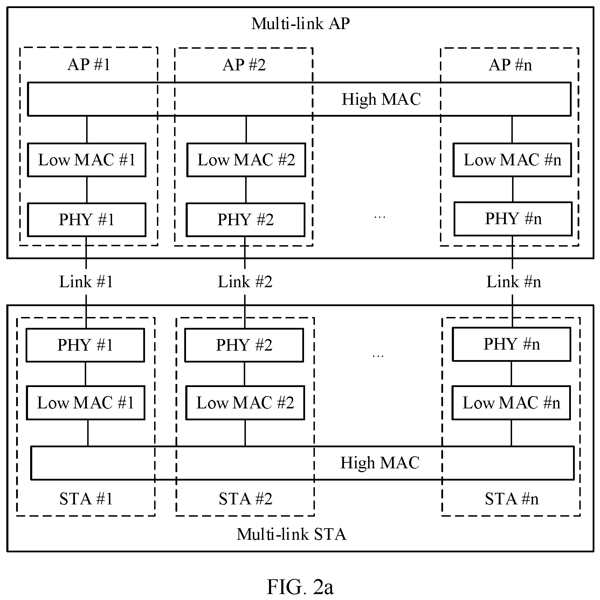

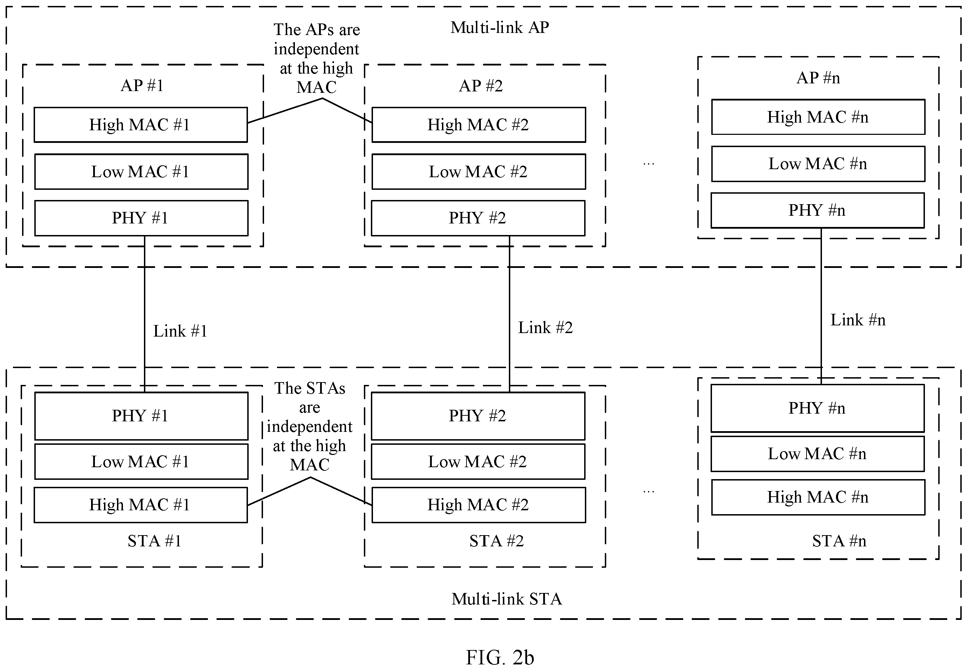

FIG. 2a and FIG. 2b each are a diagram of a manner of connection between a multi-link AP and a multi-link STA according to an embodiment of this application. The 802.11 standard focuses on an 802.11 physical layer (physical layer, PHY) part and a medium access control (medium access control, MAC) layer part in a multi-link device. Therefore, FIG. 2a and FIG. 2b each show only a PHY layer and a MAC layer as an example.

As shown in FIG. 2a and FIG. 2b, a multi-link device (for example, a multi-link AP and a multi-link STA) may include a physical layer (physical layer, PHY) processing circuit (PHY #1, PHY #2, and PHY #n shown in FIG. 2a) and a medium access control (medium access control, MAC) layer processing circuit. The physical layer processing circuit may be configured to process a physical layer signal, and the MAC layer processing circuit may be configured to process a MAC layer signal. Further, the MAC layer may be further divided into a high MAC (high-MAC) layer (for example, high MAC shown in FIG. 2a or high MAC #1 to high MAC #n shown in FIG. 2b) and a plurality of low MAC (low-MAC) layers (for example, low MAC #1 or low MAC #2 to low MAC #n as shown in each of FIG. 2a and FIG. 2b). As shown in FIG. 2a, a plurality of APs included in the multi-link AP are independent of each other at low MAC layers and PHY layers, and share a high MAC layer. A plurality of STAs included in the multi-link STA are independent of each other at low MAC layers and PHY, and share a high MAC layer. The high MAC layer is separately connected to a plurality of low MAC layers, in other words, the high MAC layer is shared by a plurality of links. As shown in FIG. 2b, a plurality of APs included in the multi-link AP are independent of each other at low MAC layers and PHY, and are also independent of each other at high MAC layers. A plurality of STAs in the multi-link STA device are independent of each other at low MAC layers and PHY, and are also independent of each other at high MAC layers. For example, the high MAC layer mainly completes operations such as allocation, encryption, and decryption on a sequence number (sequence number, SN) and a packet number (packet number, PN) of a MAC service data unit (MAC service data unit, MSDU). For example, the low MAC layer mainly completes operations such as assembling of a MAC protocol data unit (MAC protocol data unit, MPDU) on each link, channel access, and packet sending and receiving acknowledgment.

In FIG. 2a, the PHY #1 layer, the low MAC #1 layer, and the high MAC layer in the multi-link AP may be considered as an AP #1, the PHY #2 layer, the low MAC #2 layer, and the high MAC layer may be considered as an AP #2, ..., and the PHY #n layer, the low MAC #n layer, and the high MAC layer may be considered as an AP #n. That is, it may be understood that the multi-link AP includes n AP entities. In the multi-link STA, the situation is similar, to be specific, the high MAC layer in the multi-link STA is also shared by a plurality of links; and the PHY #1 layer, the low MAC #1 layer, and the high MAC layer are considered as a STA #1, the PHY #2 layer, the low MAC #2 layer, and the high MAC layer are considered as a STA #2, ..., and the PHY #n layer, the low MAC #n layer, and the high MAC layer are considered as a STA #n. That is, it may be understood that the multi-link STA includes n STA entities. As shown in FIG. 2a, the PHY #1 of the AP #1 in the multi-link AP is connected to the PHY #1 of the STA #1 in the multi-link STA, and therefore the AP #1 in the multi-link AP and the STA #1 in the multi-link STA communicate with each other on a link (for example, a link #1 shown in FIG. 2a). The PHY #2 of the AP #2 in the multi-link AP is connected to the PHY #2 of the STA #2 in the multi-link STA, and therefore the AP #2 in the multi-link AP and the STA #2 in the multi-link STA communicate with each other on a link (for example, a link #2 shown in FIG. 2a). The PHY #n of the AP #n in the multi-link AP is connected to the PHY #n of the STA #n in the multi-link STA, and therefore the AP #n in the multi-link AP and the STA #n in the multi-link STA communicate with each other on a link (for example, a link #n shown in FIG. 2a). For descriptions of FIG. 2b, refer to FIG. 2a. Details are not described herein.

For example, the high MAC layer or the low MAC layer may be implemented by one processor in a chip system of the multi-link device, or may be implemented by different processing modules in a chip system. Examples are not enumerated in embodiments of this application. It may be understood that, FIG. 2a and FIG. 2b may be understood that division of functional modules is implemented on the multi-link device. The modules shown in FIG. 2a and FIG. 2b may be implemented in a form of hardware, or may be implemented in a form of a software functional module. The PHY layers and the MAC layers shown in FIG. 2a and FIG. 2b may be understood as logical function division, and another division manner may be used during actual implementation. n shown in FIG. 2a and FIG. 2b may be equal to 0 or equal to 1, or n is an integer greater than 1, or the like.

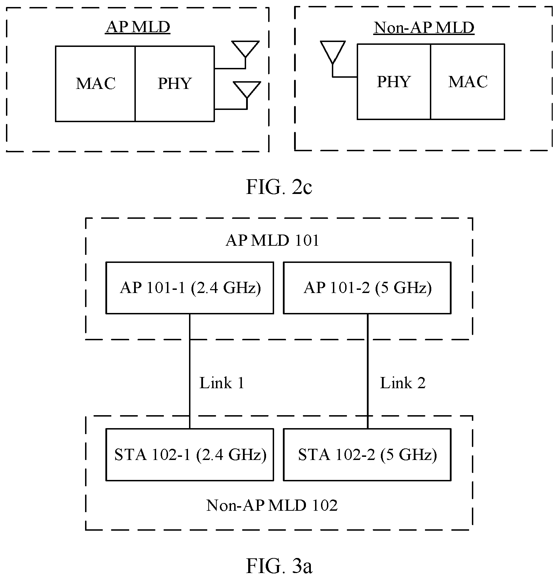

For example, the multi-link device in embodiments of this application may be a single-antenna device, or may be a multi-antenna device. For example, the multi-link device may be a device with more than two antennas. A number of antennas included in the multi-link device is not limited in embodiments of this application. FIG. 2c is a diagram of an antenna of the multi-link device according to this embodiment of this application. In FIG. 2c, an example in which an AP MLD is a multi-antenna device and a non-AP MLD is a single-antenna device is used. This should not be construed as a limitation on this embodiment of this application.

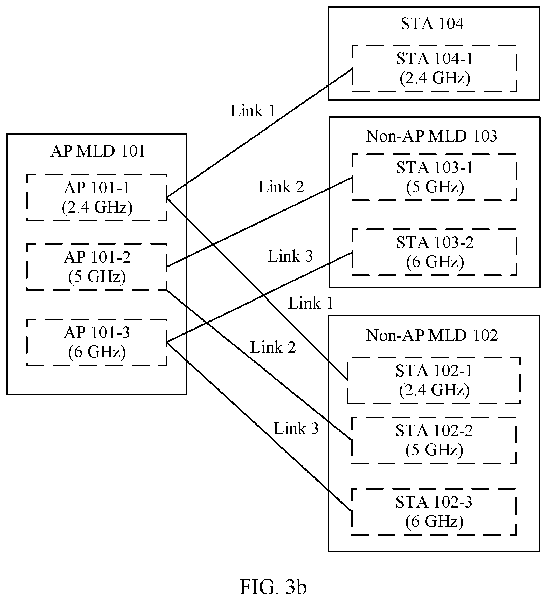

A frequency band on which the multi-link device operates may include but is not limited to sub 1 GHz, 2.4 GHz, 5 GHz, 6 GHz, and high-frequency 60 GHz. FIG. 3a and FIG. 3b are two diagrams of communication between a multi-link device and another device in a wireless local area network through a plurality of links.

FIG. 3a shows a scenario in which an AP MLD 101 communicates with a non-AP MLD 102. The AP MLD 101 includes an affiliated AP 101-1 and an affiliated AP 101-2, the non-AP MLD 102 includes an affiliated STA 102-1 and an affiliated STA 102-2, and the AP MLD 101 and the non-AP MLD 102 communicate in parallel through a link 1 and a link 2.

For example, FIG. 3b shows a scenario in which an AP MLD 101 communicates with a non-AP MLD 102, a non-AP MLD 103, and a STA 104. The AP MLD 101 includes an affiliated AP 101-1 to an affiliated AP 101-3, the non-AP MLD 102 includes three affiliated stations: a STA 102-1, a STA 102-2, and a STA 102-3, the non-AP MLD 103 includes two affiliated stations: a STA 103-1 and a STA 103-2, and the STA 104 is a single-link device, and includes a STA 104-1. The AP MLD 101 may separately communicate with the non-AP MLD 102 through a link 1, a link 2, and a link 3, communicate with the non-AP MLD 103 through the link 2 and the link 3, and communicate with the STA 104 through the link 1. In an example, the STA 104 operates on a 2.4 GHz frequency band; in the non-AP MLD 103, the STA 103-1 operates on a 5 GHz frequency band, and the STA 103-2 operates on a 6 GHz frequency band; and in the non-AP MLD 102, the STA 102-1 operates on a 2.4 GHz frequency band, the STA 102-2 operates on a 5 GHz frequency band, and the STA 102-3 operates on a 6 GHz frequency band. The AP 101-1 operating on a 2.4 GHz frequency band in the AP MLD 101 may perform uplink or downlink data transmission with the STA 104 and the STA 102-1 in the non-AP MLD 102 through the link 1. The AP 101-2 operating on a 5 GHz frequency band in the AP MLD 101 may perform, through the link 2, uplink or downlink data transmission with the STA 103-1 operating on the 5 GHz frequency band in the non-AP MLD 103, and may also perform, through the link 2, uplink or downlink data transmission with the STA 102-2 operating on the 5 GHz frequency band in the non-AP MLD 102. The AP 101-3 operating on a 6 GHz frequency band in the AP MLD 101 may perform, through the link 3, uplink or downlink data transmission with the STA 102-3 operating on the 6 GHz frequency band in the non-AP MLD 102, and may also perform, through the link 3, uplink or downlink data transmission with the STA 103-2 in the non-AP MLD 103.

FIG. 3a only shows that the AP MLD supports two frequency bands, and FIG. 3b shows only an example in which the AP MLD 101 supports three frequency bands (2.4 GHz, 5 GHz, and 6 GHz), each frequency band corresponds to one link, and the AP MLD 101 may operate on one or more of the link 1, the link 2, or the link 3 for illustration. On an AP side or a STA side, the link herein may also be understood as a station operating on the link. In an actual application, the AP MLD and the non-AP MLD may further support more or fewer frequency bands, that is, the AP MLD and the non-AP MLD may operate on more links or fewer links. This is not limited in embodiments of this application. FIG. 3a and FIG. 3b are merely simple diagrams, and do not constitute any limitation on the protection scope of embodiments of this application.

The following describes related terms in embodiments of this application in detail.

### 1. Traffic identifier-to-link mapping element

In a multi-link setup process, if no operation of traffic identifier-to-link mapping is performed between multi-link devices, all traffic identifiers are mapped to each established link by default. In other words, all types of traffic can be transmitted on each established link.

In the multi-link setup process, traffic identifier-to-link mapping may be performed between the multi-link devices. For example, an AP may carry traffic identifier-to-link mapping information in a beacon (beacon) frame or a probe response (probe response) frame, so that all stations use a corresponding mapping manner after receiving the mapping information. The manner of carrying the mapping information in the beacon frame or the probe response frame is also referred to as broadcast TID-to-link mapping. This manner can effectively improve signaling transmission efficiency.

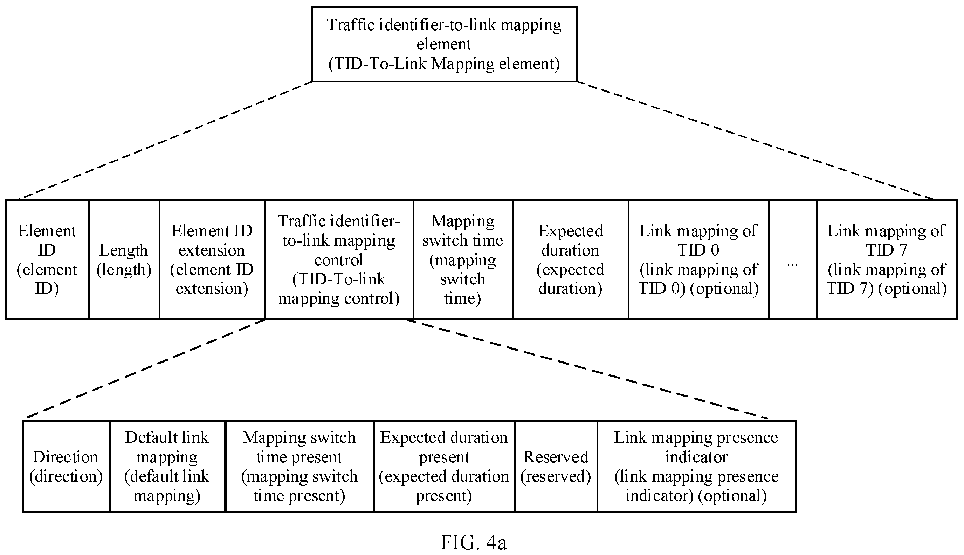

For example, the traffic identifier-to-link mapping information may be carried in the traffic identifier-to-link mapping element (TID-to-link mapping element). The traffic identifier-to-link mapping element may include at least one of the following fields: an element ID (element ID) field, a length (length) field, an element ID extension (element ID extension) (or referred to as element ID extension) field, a traffic identifier-to-link mapping control (TID-to-link mapping control) field, a mapping switch time (mapping switch time) field, and an expected duration (expected duration) (or referred to as expected duration, desired duration, expected duration, required duration, and the like) field. Optionally, the traffic identifier-to-link mapping element may further include at least one of the following fields: a link mapping of TID 0 (link mapping of TID 0) field, ..., and a link mapping of TID 7 (link mapping of TID 7) field. For a structure of the traffic identifier-to-link mapping element, refer to FIG. 4a. For example, the mapping switch time field may indicate an effective start time (or an effective time) of traffic identifier-to-link mapping, indicate an effective start time (or an effective time) of a traffic identifier-to-link mapping relationship, or indicate a time at which the traffic identifier-to-link mapping relationship is established. The mapping switch time field is present when the traffic identifier-to-link mapping element is carried in the beacon frame or the probe response frame. When the mapping relationship has taken effect, the beacon frame or the probe response frame may not carry the mapping switch time field. The expected duration field may indicate an expected end time of the traffic identifier-to-link mapping relationship, or indicate an expected end time of traffic identifier-to-link mapping. For example, the expected duration field indicates effective duration of traffic identifier-to-link mapping (corresponding to a case in which the mapping switch time field is carried in the traffic identifier-to-link mapping element) or a remaining time (corresponding to a case in which the mapping switch time field is not carried in the traffic identifier-to-link mapping element). The expected duration field is present when the traffic identifier-to-link mapping element is carried in the beacon frame or the probe response frame. The link mapping of TID 0 field may indicate a link to which a TID 0 is mapped. For example, the field may carry a bitmap, and each bit in the bitmap may correspond to a link. For example, if a value of a bit is 1, it indicates that the TID 0 is mapped to a link corresponding to the bit. For another example, if a value of a bit is 0, it indicates that the TID 0 is not mapped to a link corresponding to the bit. For example, a length of the bitmap may be equal to a maximum number of links that can be associated between the multi-link devices; a length of the bitmap may be a fixed value, for example, 16 bits; or a length of the bitmap may be equal to a number of associated links that have been established between the multi-link devices. A manner of setting the length of the bitmap is not limited in embodiments of this application. For descriptions of another link mapping of ITD field, refer to the link mapping of TID 0 field. Details are not described herein. The TID 0 to a TID 7 in this embodiment of this application are merely examples. With evolution of standards, there may be more traffic types subsequently, for example, the TID 0 to a TID 15. Therefore, a number of link mapping of TID fields in the traffic identifier-to-link mapping element is not limited in embodiments of this application. For example, the number of link mapping of TID fields in the traffic identifier-to-link mapping element may be the same as a number of types of TIDs. For example, when the TID is extended to the TID 0 to the TID 15 from the TID 0 to the TID 7, the number of link mapping of TID fields may be equal to 16.

It may be understood that, for a unicast manner, when two communication parties negotiate the traffic identifier-to-link mapping information, the mapping information usually takes effect immediately. The mapping switch time field and the expected duration field need to be sent for multiple times in the beacon frame or the probe response frame, to ensure that one or more STAs can receive the traffic identifier-to-link mapping element. Therefore, the mapping switch time field and the expected duration field are usually present when the traffic identifier-to-link mapping element is carried in the beacon frame or the probe response frame.

For example, the traffic identifier-to-link mapping control field may include at least one of the following fields: a direction (direction) field, a default link mapping (default link mapping) (or referred to as default link mapping) field, a mapping switch time present (mapping switch time present) field, an expected duration present (expected duration present) field, and a reserved (reserved) (or referred to as reserved) field. Optionally, the traffic identifier-to-link mapping control field further includes a link mapping presence indicator (link mapping presence indicator) field. For a structure of the traffic identifier-to-link mapping control field, refer to FIG. 4a. The traffic identifier-to-link mapping control field may be used to carry control information related to traffic identifier-to-link mapping. For example, the traffic identifier-to-link mapping control field is described as follows: The direction field may indicate whether a traffic direction is uplink, downlink, or uplink/downlink; the default link mapping field may indicate whether a default mapping manner is used; the mapping switch time present field may indicate whether the mapping switch time field is present; the expected duration present field indicates whether the expected duration field is present; and the link mapping presence indicator field indicates which field is present and which field is not present in the link mapping of TID 0 field to the link mapping of TID 7 field.

It may be understood that, when the default link mapping field indicates that the default mapping manner is used, it indicates that all the traffic identifiers may be mapped to each established link by default, the traffic identifier-to-link mapping control field may not include the link mapping presence indicator field, and the traffic identifier-to-link mapping element may not include the link mapping of TID 0 field to the link mapping of TID 7 field.

It may be understood that the traffic identifier-to-link mapping information, the traffic identifier-to-link mapping relationship (or the mapping relationship for short), traffic identifier-to-link mapping, and the like in embodiments of this application may be replaced with each other. The traffic identifier-to-link mapping relationship indicated by the traffic identifier-to-link mapping element in embodiments of this application may be briefly referred to as the mapping relationship (or the mapping information) indicated by the traffic identifier-to-link mapping element, or a mapping relationship indicated by an element (shown in descriptions of a mapping relationship indicated by a first element shown below, or descriptions of a mapping relationship indicated by a second element shown below).

### 2. Mapping switch time field

For example, a value carried in the mapping switch time field may be determined based on a target beacon transmission time (target beacon transmission time, TBTT) of a future delivery traffic indication bitmap (delivery traffic indication map, DTIM) beacon frame. Time precision of the TBTT is time unit (time unit, TU), and 1 TU=1024 µs. For example, a difference between TBTTs of two beacon frames may be 100 TUs (only an example).

Usually, an AP broadcasts a value of a time synchronization function (time synchronization function, TSF) timer (timer) in a beacon frame. After receiving the value of the TSF timer, a STA may update a system time locally maintained by the STA to the value of the TSF timer, so that times of all STAs in a BSS are the same as that of the AP (that is, time synchronization is implemented). For example, the value carried in the mapping switch time field may be set to a value of an 11^{th} bit to a 26^{th} bit of the TSF timer, namely, TSF [10:25] (bits 10 to 25 of the TSF). The TSF timer may be understood as a time value, a length is 64 bits, and a unit is microsecond (µs). For example, TSF timers corresponding to all STAs on one link may be the same, and TSF timers corresponding to STAs on different links may be different. As shown in FIG. 3b, TSF timers of the STA 104 and the STA 102-1 that correspond to the link 1 are the same. In other words, the TSF timer may enable times of all STAs in a BSS to be synchronous, and all the STAs maintain a local TSF timer (timer). For example, the value of the TSF timer may be carried in a timestamp (timestamp) field in the beacon frame.

It may be understood that a manner of setting the value carried in the mapping switch time field shown herein is merely an example. For descriptions of the value carried in the mapping switch time field, refer to the following description. A length of the mapping switch time field and a length of the TSF timer described above are merely examples, and should not be construed as a limitation on embodiments of this application. For descriptions of the length of the mapping switch time field, refer to the following description.

### 3. Expected duration field

The expected duration field indicates how long a traffic identifier-to-link mapping manner still lasts, and a unit of the expected duration field is TU. For example, duration indicated by the expected duration field is calculated from an end of a beacon frame. That is, the duration indicated by the expected duration field may be understood as a relative time calculated from the end of the beacon frame.

It may be understood that a manner of setting an expected end time indicated by the expected duration field described herein is merely an example. For descriptions of another manner of setting the expected duration field, refer to the following description.

When the mapping manner needs to be switched, an AP may carry two traffic identifier-to-link mapping elements in the beacon frame, for example, a first traffic identifier-to-link mapping element (which is briefly referred to as a first element hereinafter) and a second traffic identifier-to-link mapping element (which is briefly referred to as a second element hereinafter). An expected duration field in the first element may indicate how long an old mapping relationship (an old mapping manner or old mapping information) still lasts, and a mapping switch time field in the second element may indicate a time at which a new mapping relationship is established. Generally, an expected end time of the old mapping relationship needs to be the same as the time at which the new mapping relationship is established.

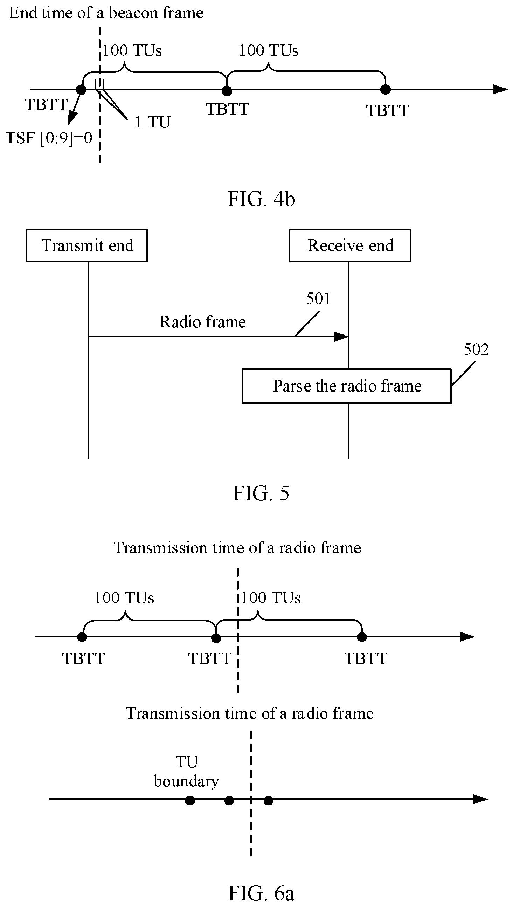

For example, a value carried in the mapping switch time field may be set to a value of an 11^{th} bit to a 26^{th} bit of a TSF timer. Therefore, the value carried in the mapping switch time field may be understood as an integer multiple of the TU, or may be understood as an integral TU on a timeline shown in FIG. 4b. As shown in FIG. 4b, black dots shown in FIG. 4b may represent TBTTs of beacon frames, and a value of 10 least significant bits of a TSF timer corresponding to the TBTT of the beacon frame may be 0, that is, TSF [0:9]=0. Generally, an actual transmission time of the beacon frame may be equal to or later than the TBTT of the beacon frame. Therefore, an actual end time of the beacon frame may be later than the TBTT. When the end time of the beacon frame is between two TUs, the expected end time indicated by the expected duration field cannot be calculated from an integer multiple of the TU. However, time precision of the time indicated by the expected duration field is TU. Consequently, duration between the end time of the beacon frame and an effective time of a new mapping relationship may not be an integer multiple of the TU. Therefore, the end time indicated by the expected duration field may not be exactly equal to the effective start time indicated by the mapping switch time field. As a result, the following problems occur:
For example, if the expected end time indicated by the expected duration field is earlier than the establishment time indicated by the mapping switch time field, there may be a case in which old mapping has ended but new mapping has not started. In this case, a non-AP MLD may temporarily switch to third mapping, resulting in unnecessary switching overheads. In particular, an AP MLD may consider that the non-AP MLD has switched to new mapping, but the non-AP MLD uses the third mapping, resulting in asymmetric mapping manners on both sides. For example, if the expected end time indicated by the expected duration field is later than the establishment time indicated by the mapping switch time field, there may be a case in which old mapping has not ended but new mapping has started. In this case, an AP MLD and a non-AP MLD may use different mapping manners, resulting in asymmetric mapping manners on both sides. When the mapping manners on both the sides are asymmetric, performance of a station may be severely affected. For example, if the non-AP MLD determines, in the mapping manner considered by the non-AP MLD, that a link is disabled (disabled) (or referred to as deactivated), the AP MLD determines, in the mapping manner considered by the AP MLD, that the link is enabled, and repeatedly attempts to initiate transmission on the link, but cannot obtain a response from the non-AP MLD, and the AP MLD may consider that a channel is busy, and increase a contention window of the AP MLD. As a result, a channel access delay is increased greatly.

In view of this, embodiments of this application provide a multi-link communication method and an apparatus, to effectively improve asymmetric mapping manners of two communication parties, and ensure that the expected end time of the old mapping relationship is the same as the time at which the new mapping relationship is established.

FIG. 5 is a schematic flowchart of a multi-link communication method according to an embodiment of this application. The method may be applied to the systems shown in FIG. 1, FIG. 2a, and FIG. 2b, or the method may be applied to the multi-link devices shown in FIG. 3a and FIG. 3b. For ease of description, the following describes the method provided in embodiments of this application by using a transmit end and a receive end as examples. The transmit end may be understood as a communication apparatus for sending a radio frame, for example, an AP MLD, an AP in a multi-link device, or an AP affiliated with an AP MLD. The receive end may be understood as a communication apparatus for receiving the radio frame, for example, a non-AP MLD, a STA in a multi-link device, or a STA affiliated with a non-AP MLD. In embodiments of this application, multi-link devices for two communication parties may be both AP MLDs or both STA MLDs, or one multi-link device is an AP MLD, and the other multi-link device is a STA MLD. Examples are not enumerated herein. It may be understood that, in embodiments of this application, the method provided in embodiments of this application is described by using two sides of the transmit end and the receive end. However, there may be another apparatus in a process of information transmission between the transmit end and the receive end. For example, information between the transmit end and the receive end is forwarded by using a forwarding apparatus. Therefore, in embodiments of this application, mutual information transfer can be implemented by technical means that can be completed by a person skilled in the art, and an apparatus other than the transmit end and the receive end is not limited in embodiments of this application.

As shown in FIG. 5, the multi-link communication method includes the following steps.

501: The transmit end sends a radio frame, and correspondingly, the receive end receives the radio frame.

For example, before sending the radio frame, the transmit end may generate the radio frame.

502: The receive end parses the radio frame.

The following describes in detail the radio frame in embodiments of this application and a manner in which the receive end parses the radio frame.

In this embodiment of this application, the radio frame may include at least two traffic identifier-to-link mapping elements. For example, the radio frame includes four elements, where the first two elements may indicate mapping switching of a BSS corresponding to a transmitted BSSID (the two elements are carried outside a multiple BSSID element), and the last two elements may indicate mapping switching of a BSS corresponding to a nontransmitted BSSID (the two elements are carried in the multiple BSSID element). For another example, the radio frame includes two traffic identifier-to-link mapping elements, for example, a first traffic identifier-to-link mapping element (an old mapping relationship) and a second traffic identifier-to-link mapping element (a new mapping relationship). For example, when a first element and a second element in the radio frame are located outside the multiple BSSID element, switching between a mapping relationship indicated by the first element and a mapping relationship indicated by the second element may be used in an MLD in which the transmitted BSSID is located. When a first element and a second element in the radio frame are located in a nontransmitted BSSID profile in the multiple BSSID element, switching between a mapping relationship indicated by the first element and a mapping relationship indicated by the second element is used in an MLD in which a nontransmitted BSSID corresponding to the nontransmitted BSSID profile is located.

The following describes in detail a method for ensuring that an end time of the old mapping relationship is the same as an effective time of the new mapping relationship when the radio frame includes two traffic identifier-to-link mapping elements.

### Manner 1

The first element includes an expected duration field, the expected duration field indicates an expected end time of the mapping relationship indicated by the first element, and the expected duration field may be determined based on a most recent TBTT before a transmission time of the radio frame. The second element includes a mapping switch time field, and the mapping switch time field indicates a time at which the mapping relationship indicated by the second element is established.

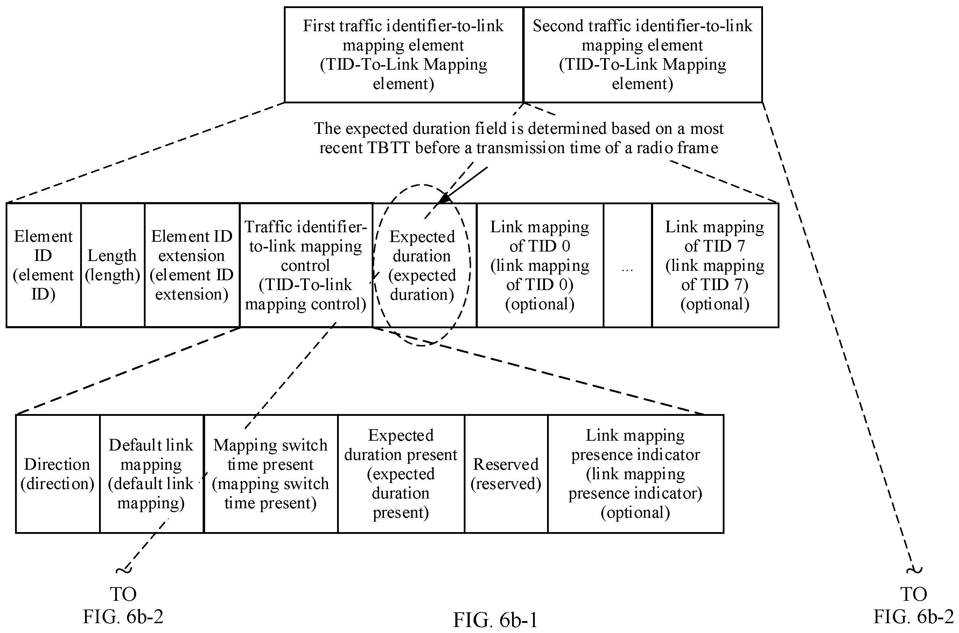

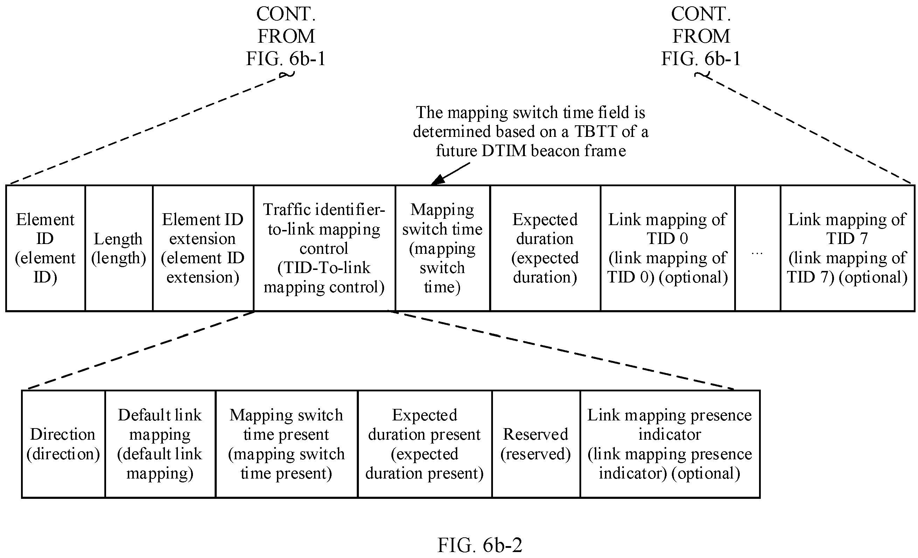

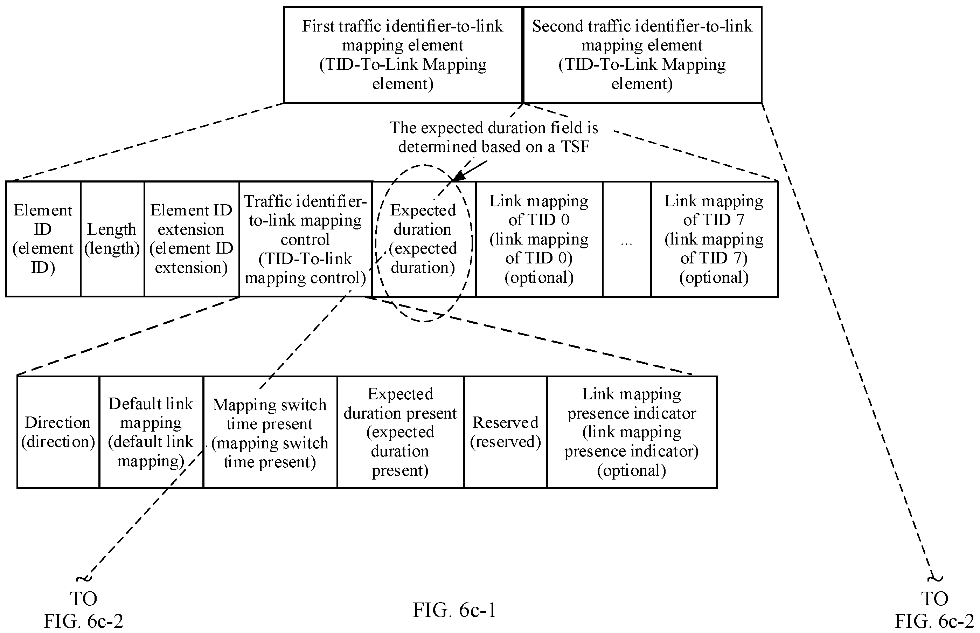

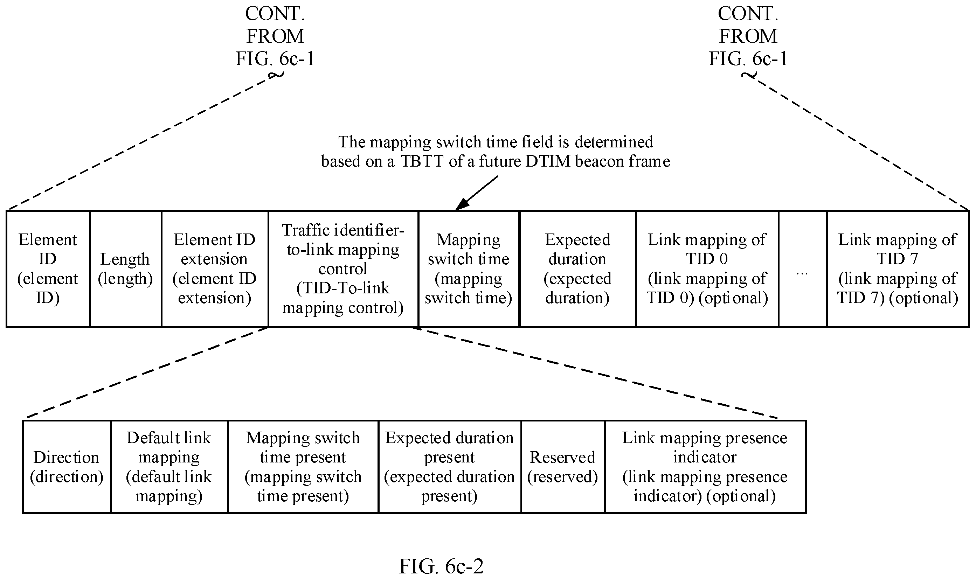

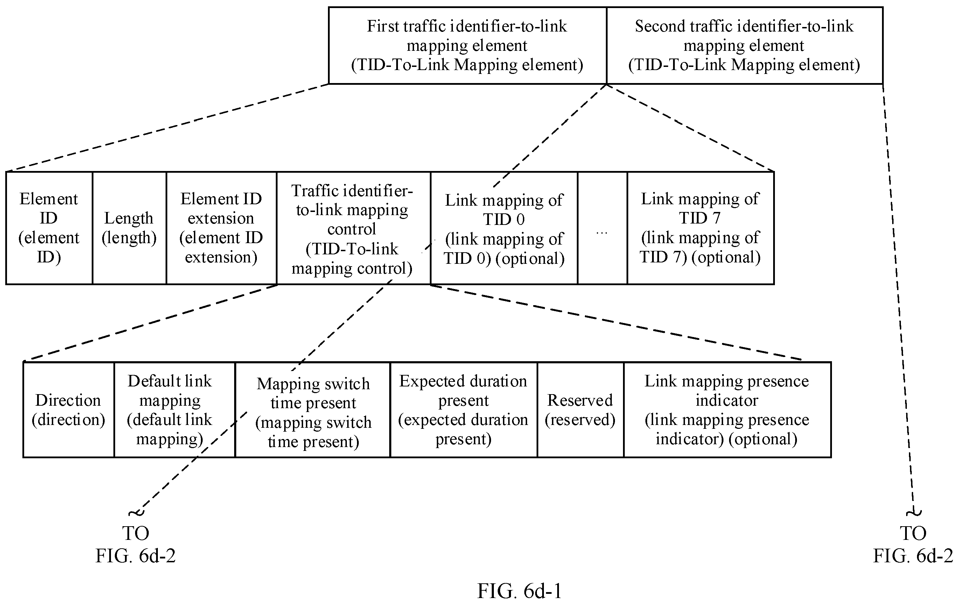

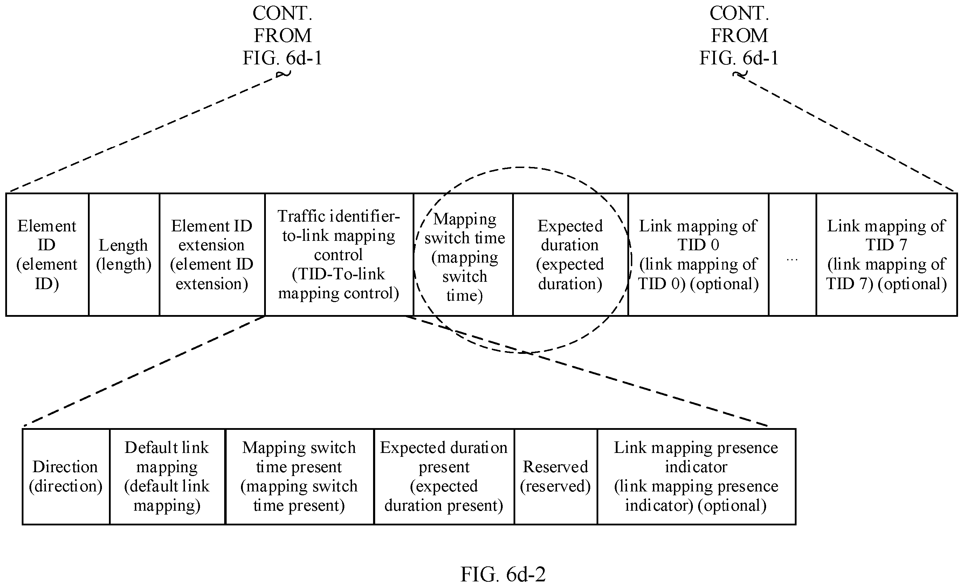

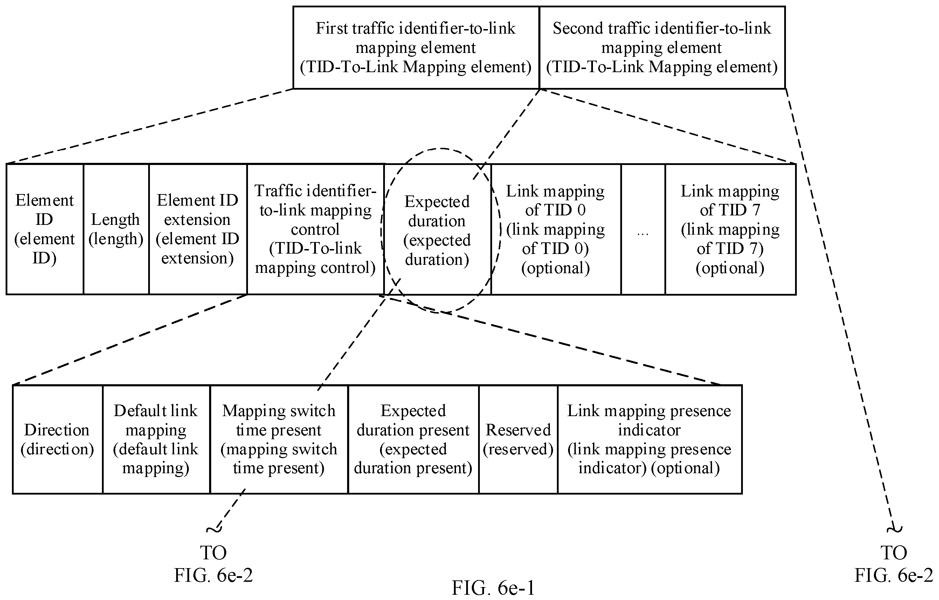

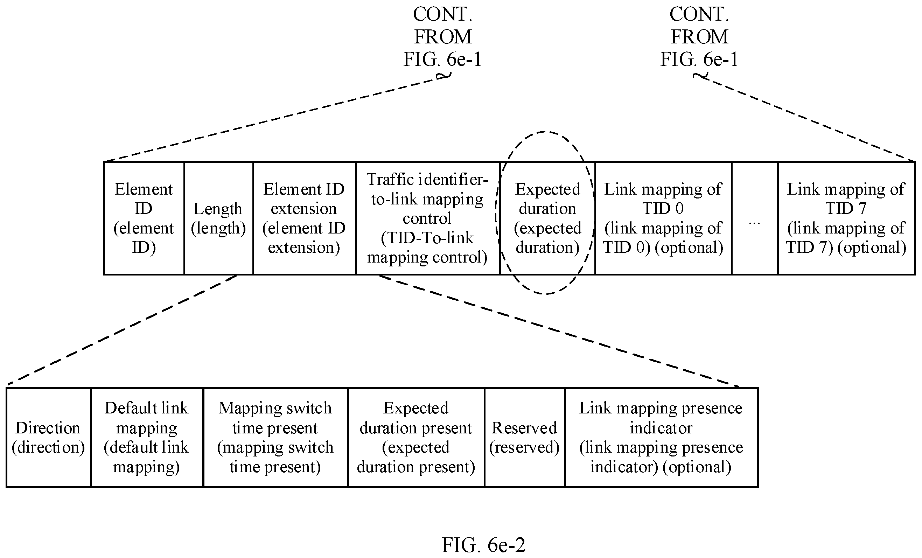

It may be understood that the most recent TBTT before the transmission time of the radio frame in this embodiment of this application may be understood as a TBTT earlier than the transmission time of the radio frame, and the TBTT is closest to the transmission time of the radio frame relative to another TBTT (a TBTT other than the foregoing most recent TBTT). As shown in FIG. 6a, black dots in FIG. 6a may represent TBTTs, and a dashed line part may represent a transmission time of the radio frame. In this case, a TBTT (or a TU boundary) that is before the transmission time of the radio frame and that is closest to the transmission time of the radio frame is the 2^{nd} black dot in FIG. 6a.

It may be understood that, in this embodiment of this application, a case in which the transmission time of the radio frame is exactly at the TBTT (or TU boundary) may be a special example of the most recent TBTT (or TU boundary) before the transmission time of the radio frame. If the transmission time of the radio frame is exactly at the TBTT (or TU boundary), the expected duration field may be determined based on the transmission time of the radio frame. For example, duration (or remaining duration) or the like of the mapping relationship indicated by the first element is determined by using the transmission time of the radio frame as a starting point.

For example, the expected duration field may be determined based on a most recent TU boundary (boundary) before the transmission time of the radio frame. The TU boundary may be understood as a time corresponding to a case in which a value of the 10 least significant bits of a TSF timer is 0, or the TU boundary may be understood as TSF [0:9]=0.

For example, time precision of the expected end time indicated by the expected duration field may be TU. The expected end time indicated by the expected duration field is calculated from the most recent TBTT before the transmission time of the radio frame (or the most recent TU boundary before the transmission time of the radio frame), and the time indicated by the expected duration field is in a unit of TU. Therefore, compared with a manner in which the time indicated by the expected duration field is determined based on an end time of a beacon frame, this manner can effectively ensure that the expected end time that is of the mapping relationship and that is determined based on the expected duration field is an integer multiple of the TU, and can ensure that the expected end time indicated by the expected duration field is the same as the establishment time indicated by the mapping switch time field.

For example, a structure of the traffic identifier-to-link mapping element may be shown in FIG. 6b-1 and FIG. 6b-2. The expected duration field in the first element is determined based on the TBTT or the TU boundary before the transmission time of the radio frame, and the mapping switch time field in the second element is determined based on a TBTT of a future beacon frame. Optionally, the expected duration field in the second element shown in FIG. 6b-1 and FIG. 6b-2 may also be determined based on the most recent TBTT or TU boundary before the transmission time of the radio frame. For descriptions of other fields in the element shown in FIG. 6b-1 and FIG. 6b-2, refer to FIG. 4a and the like. The mapping switch time field in the second element shown in FIG. 6b-1 and FIG. 6b-2 may be determined based on the TBTT of the future beacon frame, for example, set to TSF [10:25].

For the manner 1, after receiving the radio frame, the receive end determines the first element and the second element based on locations of the first element and the second element in the radio frame. For example, in the radio frame, the first element may be located before the second element. Certainly, a location relationship between the first element and the second element described herein is merely an example. For ease of description, the following describes the radio frame in this embodiment of this application by using an example in which the first element is located before the second element.

For the manner 1, after receiving the radio frame, the receive end may determine, based on the expected duration field in the first element, the expected end time of the mapping relationship indicated by the first element, and determine, based on the mapping switch time field in the second element, the time at which the mapping relationship indicated by the second element is established. For example, the receive end may determine, by using the most recent TBTT or TU boundary before the transmission time of the radio frame as the starting point and using a value carried in the expected duration field in the first element as duration (duration, remaining duration, or the like), the expected end time of the traffic identifier-to-link mapping relationship indicated by the first element. A manner in which the receive end parses another field in the radio frame is not limited in embodiments of this application.

In this embodiment of this application, because a difference between any two TBTTs on a link is in a unit of TU, when the time indicated by the expected duration field is calculated by using the most recent TBTT moment before the transmission time of the radio frame as the starting point, the effective time indicated by the mapping switch time field in the second element may be accurately indicated.

### Manner 2

The first element includes an expected duration field, the expected duration field indicates an expected end time of the mapping relationship indicated by the first element, and a time indicated by the expected duration field is determined based on a TSF timer. The second element includes a mapping switch time field, and the mapping switch time field indicates a time at which the mapping relationship indicated by the second element is established.

That the time indicated by the expected duration field is determined based on the TSF timer may also be understood as follows: The expected end time indicated by the expected duration field is determined based on a value of a TSF timer of a BSS corresponding to a sending link, and the sending link is used to send the radio frame. When the time indicated by the expected duration field is determined based on an end time of a beacon frame, the time indicated by the expected duration field is a relative time. When the expected duration field is determined based on the TSF timer, the time indicated by the expected duration field may be understood as an absolute time.

For example, a value carried in the expected duration field may be any one of the following:
The value carried in the expected duration field may be the same as a value of an 11^{th} bit to a 26^{th} bit of the TSF timer, for example, TSF [10:25]. Therefore, the time indicated by the expected duration field is set in a same manner as the time indicated by the mapping switch time field. In this case, a length of the expected duration field may be 2 octets.

The value carried in the expected duration field may be the same as a value of an 11^{th} bit to a 34^{th} bit of the TSF timer, for example, TSF [10:33]. Therefore, the time indicated by the expected duration field may be greater than the time indicated by the mapping switch time field. This effectively ensures that the end time of the traffic identifier-to-link mapping relationship can be greater than the effective time. In this case, a length of the expected duration field may be 3 octets.

The value carried in the expected duration field may be the same as a value of an 11^{th} bit to a 50^{th} bit of the TSF timer, for example, TSF [10:49]. Therefore, the time indicated by the expected duration field may be greater than the time indicated by the mapping switch time field. This effectively ensures that the end time of the traffic identifier-to-link mapping relationship can be greater than the effective time. In this case, a length of the expected duration field may be 4 octets.

It may be understood that the value carried in the expected duration field starts from the 11^{th} bit of the TSF timer because a time indicated by a first bit to a tenth bit of the TSF timer is less than 1 TU. Therefore, starting from the 11^{th} bit of the TSF timer can effectively ensure that the time indicated by the expected duration field is greater than or equal to 1 TU. The foregoing relationship between the value carried in the expected duration field and the TSF timer is merely an example. For example, the value carried in the expected duration field may alternatively be a value of the 11^{th} bit to a 40^{th} bit of the TSF timer. Examples are not enumerated in embodiments of this application.

For example, a structure of the traffic identifier-to-link mapping element may be shown in FIG. 6c-1 and FIG. 6c-2. The time indicated by the expected duration field is changed to an absolute time, for example, is set to a system time at an end of the mapping relationship indicated by the first element. This can effectively ensure that the time indicated by the expected duration field in the first element can indicate the effective time indicated by the mapping switch time field in the second element. Optionally, the expected duration field in the second element shown in FIG. 6c-1 and FIG. 6c-2 may also be determined based on the TSF timer. For example, a value carried in the mapping switch time field in the second element may be determined based on a TBTT of a future DTIM beacon frame (for example, in a time after the radio frame). For example, time precision of the effective time indicated by the mapping switch time field in the second element may be TU, or may be µs. For descriptions of other fields in the element shown in FIG. 6c-1 and FIG. 6c-2, refer to FIG. 4a and the like.

For the manner 2, after receiving the radio frame, the receive end determines the first element and the second element based on locations of the first element and the second element in the radio frame.

For the manner 2, after receiving the radio frame, after receiving the radio frame, the receive end may determine, based on the expected duration field in the first element, the expected end time of the mapping relationship indicated by the first element, and determine, based on the mapping switch time field in the second element, the time at which the mapping relationship indicated by the second element is established. For example, the receive end may use the value carried in the expected duration field in the first element as the expected end time of the traffic identifier-to-link mapping relationship indicated by the first element. A manner in which the receive end parses another field in the radio frame is not limited in embodiments of this application.

In this embodiment of this application, the time indicated by the expected duration field is changed to an absolute time, for example, is set to a system time at the end of the mapping relationship indicated by the first traffic identifier-to-link mapping element. This can effectively ensure that the expected end time indicated by the expected duration field in the first traffic identifier-to-link mapping element can indicate the establishment time indicated by the mapping switch time field in the second traffic identifier-to-link mapping element.

### Manner 3

For example, as shown in FIG. 6d-1 and FIG. 6d-2, the first element does not include an expected duration field, the second element includes a mapping switch time field, and the mapping switch time field in the second element indicates a time at which the mapping relationship indicated by the second element is established and an expected end time of the mapping relationship indicated by the first element. For example, the expected end time of the mapping relationship indicated by the first element may be equal, by default, to the establishment time indicated by the mapping switch time field in the second element. For descriptions of other fields in the element shown in FIG. 6d-1 and FIG. 6d-2, refer to FIG. 4a.

Optionally, the expected duration field in the second element may be determined based on a most recent TBTT or TU boundary before a transmission time of the radio frame. For example, an expected end time of the mapping relationship indicated by the second element is calculated by using the most recent TBTT or TU boundary before the transmission time of the radio frame as a starting point. Optionally, the expected duration field in the second element may be determined based on a TSF timer. Optionally, the expected duration field in the second element may be determined based on an end time of a beacon frame. For example, the expected end time of the mapping relationship indicated by the second element is calculated by using the end time of the beacon frame as a starting point. Optionally, the mapping switch time field in the second element and/or the first element may be determined based on a TBTT of a future beacon frame. For example, time precision of an effective time indicated by the mapping switch time field is TU. Optionally, time precision of an effective time indicated by the mapping switch time field in the second element and/or the first element is µs. Optionally, a length of the mapping switch time field is 2 octets, 4 octets, or the like. For descriptions of the mapping switch time field, refer to the foregoing terms, or refer to the following descriptions of the mapping switch time field.

For the manner 3, after receiving the radio frame, the receive end may determine the first element and the second element based on locations of the first element and the second element in the radio frame. For example, after receiving the radio frame, if the receive end finds that the first element does not include the expected duration field and the second element includes the mapping switch time field, the receive end may use the establishment time indicated by the mapping switch time field in the second element as the expected end time of the mapping relationship indicated by the first element.

In this embodiment of this application, the first traffic identifier-to-link mapping element does not include the expected duration field, and the second traffic identifier-to-link mapping element includes the mapping switch time field. Therefore, the mapping switch time field may indicate the time at which the mapping relationship indicated by the second traffic identifier-to-link mapping element is established, and may indicate the expected end time of the mapping relationship indicated by the first traffic identifier-to-link mapping element. For example, the expected end time of the mapping relationship indicated by the first traffic identifier-to-link mapping element may be equal to, by default, the time at which the mapping relationship indicated by the second traffic identifier-to-link mapping element is established. This effectively ensures that the expected end time of the mapping relationship indicated by the first traffic identifier-to-link mapping element is the same as the time at which the mapping relationship indicated by the second traffic identifier-to-link mapping element is established.

### Manner 4

For example, as shown in FIG. 6e-1 and FIG. 6e-2, the first element includes an expected duration field, the second element does not include a mapping switch time field, and the expected duration field in the first element indicates a time at which the mapping relationship indicated by the second element is established and an expected end time of the mapping relationship indicated by the first element. For example, the time at which the mapping relationship indicated by the second element is established may be equal, by default, to the expected end time indicated by the expected duration field in the first element. For descriptions of other fields in the element shown in FIG. 6e-1 and FIG. 6e-2, refer to FIG. 4a.

Optionally, the expected duration field in the first element and/or an expected duration field in the second element may be determined based on a most recent TBTT or TU boundary before a transmission time of the radio frame. For example, the expected end time of the mapping relationship indicated by the first element and/or an expected end of the mapping relationship indicated by the second element are/is calculated by using the most recent TBTT or TU boundary before the transmission time of the radio frame as a starting point. Optionally, the expected duration field in the first element and/or the expected duration field in the second element may be determined based on a TSF timer. Optionally, the expected duration field in the first element and/or the expected duration field in the second element may be determined based on an end time of a beacon frame. For example, the expected end time of the mapping relationship indicated by the first element and/or the expected end time of the mapping relationship indicated by the second element are/is calculated by using the end time of the beacon frame as a starting point. Optionally, time precision of an effective time indicated by a mapping switch time field in the first element is TU or µs. Optionally, a length of the mapping switch time field in the first element is 2 octets, 4 octets, or the like. For descriptions of the mapping switch time field, refer to the foregoing terms, or refer to the following descriptions of the mapping switch time field.

For the manner 4, after receiving the radio frame, the receive end may determine the first element and the second element based on locations of the first element and the second element in the radio frame. For example, after receiving the radio frame, if the receive end finds that the first element includes the expected duration field and the second element does not include the mapping switch time field, the receive end may use the expected end time indicated by the expected duration field in the first element as the time at which the mapping relationship indicated by the second element is established.

In this embodiment of this application, the first traffic identifier-to-link mapping element includes the expected duration field, and the second traffic identifier-to-link mapping element does not include the mapping switch time field. Therefore, the expected duration field may indicate the expected end time of the mapping relationship indicated by the first traffic identifier-to-link mapping element, and may indicate the time at which the mapping relationship indicated by the second traffic identifier-to-link mapping element is established. For example, the time at which the mapping relationship indicated by the second traffic identifier-to-link mapping element is established may be equal to, by default, the expected end time of the mapping relationship indicated by the first traffic identifier-to-link mapping element. This effectively ensures that the expected end time of the mapping relationship indicated by the first traffic identifier-to-link mapping element is the same as the time at which the mapping relationship indicated by the second traffic identifier-to-link mapping element is established.

### Manner 5

The first element includes an expected duration field, and the expected duration field indicates an expected end time of the mapping relationship indicated by the first element. The second element includes a mapping switch time field, and the mapping switch time field indicates a time at which the mapping relationship indicated by the second element is established.

In an example, the expected duration field in the first element may further indicate the time at which the mapping relationship indicated by the second element is established. In other words, the time at which the mapping relationship indicated by the second element is established may be determined based on the expected duration field in the first element. If the expected end time of the mapping relationship indicated by the first element overlaps the time at which the mapping relationship indicated by the second element is established, the receive end may determine, based on the expected duration field in the first element, the time at which the mapping relationship indicated by the second element is established and the expected end time of the mapping relationship indicated by the first element. That is, the receive end may ignore the mapping switch time field in the second element.

In another example, the mapping switch time field in the second element may further indicate the expected end time of the mapping relationship indicated by the first element. In other words, the expected end time of the mapping relationship indicated by the first element may be determined based on the mapping switch time field in the second element. If the expected end time of the mapping relationship indicated by the first element overlaps the time at which the mapping relationship indicated by the second element is established, the receive end may determine, based on the mapping switch time field in the second element, the time at which the mapping relationship indicated by the second element is established and the expected end time of the mapping relationship indicated by the first element. That is, the receive end may ignore the expected duration field in the first element.

In still another example, when an end time of the traffic identifier-to-link mapping relationship indicated by the first traffic identifier-to-link mapping element is later than an effective time of the traffic identifier-to-link mapping relationship indicated by the second traffic identifier-to-link mapping element, the end time of the traffic identifier-to-link mapping relationship indicated by the first traffic identifier-to-link mapping element may be equal to the effective time of the traffic identifier-to-link mapping relationship indicated by the second traffic identifier-to-link mapping element. In other words, when the end time of the mapping relationship indicated by the first element is later than a start time of the mapping relationship indicated by the second element, an effective time of the mapping relationship indicated by the first element overlaps the effective time of the mapping relationship indicated by the second element. Therefore, when the effective times of two pieces of mapping information overlap in time, a mapping relationship corresponding to a later time in the start time (for example, the time at which the new mapping relationship is established) and the end time (for example, the expected end time of the old mapping relationship) may be used as a new traffic identifier-to-link mapping relationship. After receiving the radio frame, the receive end may determine the first element and the second element based on locations of the first element and the second element in the radio frame. For example, after receiving the radio frame, if the receive end finds that the end time of the mapping relationship indicated by the first element is later than the effective time of the mapping relationship indicated by the second element, the receive end may use the effective time of the mapping information of the second element as the end time of the mapping relationship indicated by the first element.

In yet another example, when an effective time of the mapping relationship indicated by the first element overlaps an effective time of the mapping relationship indicated by the second element, the time at which the mapping relationship indicated by the second element is established may be fixedly used as the expected end time of the mapping relationship indicated by the first element, or the expected end time of the mapping relationship indicated by the first element may be fixedly used as the time at which the mapping relationship indicated by the second element is established.

Optionally, for the manner 5, the second element may further include an expected duration field, and the expected duration field indicates an expected end time of the mapping relationship indicated by the second element.

The radio frame in this embodiment of this application may include a beacon frame, a probe response frame, and the like. For example, the radio frame may include a capability information element and a timestamp (timestamp) field in addition to the traffic identifier-to-link mapping element. The timestamp field may be used to carry a value of a TSF timer (or referred to as the TSF timer (timer)).

In this embodiment of this application, the manner 1 to the manner 5 can effectively ensure that the expected end time of the mapping relationship indicated by the first element is the same as the time at which the mapping relationship indicated by the second element is established. This effectively improves asymmetric mapping manners of two communication parties.

Generally, different links between multi-link devices may correspond to different mapping relationships. For example, in the multi-link device, a traffic identifier on a first link may be different from a traffic identifier on a second link. Although different links between the multi-link devices may correspond to different traffic identifiers, effective times of mapping relationships indicated by traffic identifier-to-link mapping elements are the same. In this case, if a mapping relationship may be determined based on a TBTT on another link, a time indicated by a mapping switch time field in a traffic identifier-to-link mapping element sent on a current link may not be accurately synchronized to the TBTT on the another link. In other words, the mapping relationship is determined based on the TBTT on the another link. However, when the traffic identifier-to-link mapping element is received on the current link, the receive end still uses a TBTT on the current link as a criterion, and consequently, a time at which a mapping relationship on the current link is established is inconsistent with a time at which a mapping relationship on the another link is established. As shown in FIG. 7, a time indicated by a mapping switch time field in a traffic identifier-to-link mapping element is determined based on a first TBTT on a first link. However, when the receive end corresponding to a second link receives the traffic identifier-to-link mapping element, an obtained time indicated by the mapping switch time field is different from the first TBTT on the first link. Therefore, the receive end corresponding to the second link cannot accurately learn of, based on the mapping switch time field, a time at which a mapping relationship is established.

In view of this, embodiments of this application further provide a multi-link communication method and an apparatus. A time at which a mapping relationship on a current link is established can be accurately indicated when an effective time of a mapping relationship is determined based on a TBTT on another link.

For a procedure of the multi-link communication method in this embodiment of this application, refer to FIG. 5. Details are not described herein. A difference between the method provided in this embodiment of this application and that shown in FIG. 5 lies in that, in this embodiment of this application, a transmit end may send a radio frame based on a second link, and correspondingly, a receive end may receive the radio frame based on the second link.

The following describes in detail the radio frame and a mapping switch time field in this embodiment of this application. For example, the radio frame in this embodiment of this application includes a traffic identifier-to-link mapping element, the traffic identifier-to-link mapping element includes a mapping switch time field, the mapping switch time field indicates a time at which a traffic identifier-to-link mapping relationship is established, and the establishment time is determined based on a TBTT on a first link. For descriptions of other elements in the radio frame, a beacon frame, and a probe response frame, refer to the foregoing description.

### Manner 6

The traffic identifier-to-link mapping element further includes a first field, the first field indicates a time difference (or referred to as a time difference, an offset difference, an offset, or the like) between a first TBTT on the first link and a time point that is on the second link and that corresponds to the first TBTT. The time point may not be later than the first TBTT, and is a time point that is on the second link and that is closest to the first TBTT. FIG. 7 is used as an example. A time point at which a value of 10 least significant bits (for example, a first bit to a tenth bit, or TSF [0:9]) of a TSF timer is equal to 0, that is on the second link, that is not later than the first TBTT, and that is closest to the first TBTT may be understood as a location (namely, a TU boundary) of the 2^{nd} black dot on the second link shown in FIG. 7. For example, time precision of the time difference indicated by the first field is µs. For example, when the time point is a time point at which the value of the 10 least significant bits of the TSF timer is equal to 0 and that is closest to the first TBTT, a value carried in the first field may be the value of the 10 least significant bits of the value of the TSF timer of a BSS corresponding to the second link, for example, TSF [0:9]. When the time point is a TBTT on the second link, because a time difference between the TBTT on the first link and a TBTT on the second link may be long, a specific length of the first field is not limited in embodiments of this application.

Based on the first field and the time indicated by the mapping switch time field, the receive end on the second link may learn of, after the time indicated by the mapping switch time field (the time point that is on the second link and that corresponds to the first TBTT), a number of microseconds before the time at which the mapping relationship is established. For example, after receiving the radio frame, the receive end may determine, based on the time indicated by the mapping switch time field and the time difference indicated by the first field, the time at which the mapping relationship is established, so that the time at which the mapping relationship on the second link is established may be consistent with a time at which a mapping relationship on the first link is established. For example, when the mapping switch time field is determined based on the first TBTT, a value carried in the mapping switch time field may be a value of an 11^{th} bit to a 26^{th} bit (only an example) of a TSF timer corresponding to the first TBTT on the first link. When receiving the mapping switch time field, the receive end determines, based on the TSF timer indicated by the mapping switch time field, the first TBTT on the first link instead of the TBTT on the second link. Therefore, the receive end may determine, based on the first field and the time indicated by the mapping switch time field, the time at which the mapping relationship is established.

For example, a structure of the traffic identifier-to-link mapping element may be shown in FIG. 8a. For example, the first field may be referred to as a mapping switch time extension (mapping switch time extension) field, an offset field, or the like. A specific name of the first field is not limited in embodiments of this application. Optionally, the traffic identifier-to-link mapping element may further include a second field, and the second field may indicate whether the first field is present in the traffic identifier-to-link mapping element. For example, the second field may be referred to as a mapping switch time extension present field, an offset present field, or the like. A specific name of the second field is not limited in embodiments of this application. For example, a length of the second field may be 1 bit. For example, if a value of the second field is 1, it may indicate that the first field is present in the traffic identifier-to-link mapping element; or if a value of the second field is 0, it may indicate that the first field is not present in the traffic identifier-to-link mapping element. Certainly, values and meanings of the fields described herein are merely examples, and should not be construed as a limitation on embodiments of this application. For descriptions of the traffic identifier-to-link mapping element shown in FIG. 8a, refer to FIG. 4a.

It may be understood that the method shown in the manner 6 may be applied to a case in which the radio frame includes one traffic identifier-to-link mapping element, or may be applied to a case in which the radio frame includes at least two traffic identifier-to-link mapping elements, for example, includes a first element and a second element. In a case in which two elements are included, with reference to the manner 1 described above, if the first element includes an expected duration field and a first field, the expected duration field is determined based on a most recent TBTT or TU boundary before a transmission time of the radio frame, and the TBTT or TU boundary is determined based on the first link. The first field indicates a time difference between a time point corresponding to the second link and the TBTT or the TU boundary. For example, after receiving the radio frame, the receive end may determine, by using the most recent TBTT or TU boundary before the transmission time of the radio frame as a starting point and using a value carried in the expected duration field and the time difference indicated by the first field as duration, an expected end time of a mapping relationship indicated by the first element. As shown in FIG. 7, an expected end time determined based on the most recent TBTT or TU boundary before the transmission time of the radio frame and the expected duration field in the first element is the time point corresponding to the first TBT shown in FIG. 7. However, to keep consistent with the expected end time of the mapping relationship on the first link, the receive end further needs to determine, based on the first field, the expected end time of the mapping relationship indicated by the first element, namely, the time corresponding to the first TBTT shown in FIG. 7. For example, the second element may include a mapping switch time field and a first field. For descriptions of the mapping switch time field and the first field, refer to the manner 6.

In this embodiment of this application, the radio frame includes the time difference between the first TBTT on the first link and the corresponding time point on the second link, so that when the time at which the mapping relationship is established is determined based on the TBTT on the first link, the receive end on the second link can still accurately determine, based on the radio frame, the time at which the mapping relationship corresponding to the second link is established.

It may be understood that the manner 6 provided in this embodiment of this application may be combined with any one or more of the manner 1 to the manner 5.

### Manner 7

Time precision of an effective time indicated by a mapping switch time field is µs. For example, a length of the mapping switch time field may be 4 octets. Because TSF timers of all STAs, on a link, in a multi-link device are synchronized with those of APs, when the time precision of the effective time indicated by the mapping switch time field is µs, the mapping switch time field may be determined based on a TSF timer (or determined based on a value of the TSF timer). For example, a value carried in the mapping switch time field may start from a zeroth bit of the value of the TSF timer. For example, the radio frame includes a traffic identifier-to-link mapping element, the element includes a mapping switch time field, and the mapping switch time field may be determined based on a TSF timer of a BSS corresponding to a second link. For another example, the radio frame includes two elements, and at least one of the two elements may include a mapping switch time field. For descriptions that the radio frame includes the two elements, refer to the foregoing manner 1 to manner 5. Optionally, when the time precision of the effective time indicated by the mapping switch time field is µs, time precision of an effective time indicated by an expected duration field may also be µs (for example, from the zeroth bit of the value of the TSF timer). For example, the traffic identifier-to-link mapping element may further include a third field, and the third field indicates the time precision of the expected duration field. For descriptions of the third field, refer to the following descriptions of a length field. Details are not described herein.

In this embodiment of this application, when the time precision of the establishment time indicated by the mapping switch time field is changed to µs, even if the time at which the mapping relationship is established is determined based on the TBTT on the first link, the receive end on the second link can still accurately determine, based on the radio frame, the time at which the mapping relationship corresponding to the second link is established.

### Manner 8

The traffic identifier-to-link mapping element further includes a length field, and the length field indicates a length of a mapping switch time field. When a value carried in the length field is a first value (for example, 2), time precision of an establishment time indicated by the mapping switch time field is microsecond, for example, the length is 4 octets. When a value carried in the length field is a second value (for example, 1), time precision of an establishment time indicated by the mapping switch time field is TU, for example, the length is 2 octets. When a value carried in the length field is a third value (for example, 0), the length of the mapping switch time field may be 0 or may not present.

It may be understood that, when the time precision of the establishment time indicated by the mapping switch time field is µs, refer to the foregoing manner 7.

As shown in FIG. 8b, the length field may also be referred to as a mapping switch time size field. In other words, a mapping switch time present field in FIG. 4a is reused as the mapping switch time size field. For descriptions of other fields in FIG. 8b, refer to FIG. 4a. Details are not described herein. For example, the traffic identifier-to-link mapping element may further include a third field, and the third field indicates time precision of an expected duration field. For descriptions of the third field, refer to the descriptions of the length field. Details are not described herein.

The method shown in the manner 8 may be applied to a case in which the radio frame includes one traffic identifier-to-link mapping element, or may be applied to a case in which the radio frame includes at least two traffic identifier-to-link mapping elements, for example, includes a first element and a second element. For example, the first element includes an expected duration field, the expected duration field indicates an expected end time of a mapping relationship corresponding to the first element, and the expected end time is determined based on the first link. The second element includes a mapping switch time field and a length field. The mapping switch time field indicates a time at which a mapping relationship corresponding to the second element is established, and the establishment time is established is determined based on the first link. For example, when the time precision of the mapping switch time field is µs, and the time precision of the expected duration field may also be µs.

It may be understood that the first link and the second link shown in this embodiment of this application are merely examples. For example, the second link may be understood as any link other than the first link between multi-link devices.

In this embodiment of this application, the time precision of the establishment time indicated by the mapping switch time field may be changed based on different scenario requirements. For example, time precision may be µs when a mapping relationship is established based on another link; or time precision may be TU when a mapping relationship is established based on a current link.

### Manner 9

A difference between TSF timers on different links is set to an integer multiple of a TU. When values of TSF timers of BSSs corresponding to different links each are an integer multiple of the TU, the mapping switch time field may indicate the first TBTT of the first link. Therefore, the receive end can effectively learn of, based on the mapping switch time field, the establishment time at which the mapping relationship corresponding to the second link is established.

It may be understood that the method shown in the manner 6 to the manner 9 may be applied to a case in which the radio frame includes one traffic identifier-to-link mapping element, or may be applied to a case in which the radio frame includes at least two traffic identifier-to-link mapping elements, for example, includes a first element and a second element. In a case in which two elements are included, the manner 6 to the manner 9 may be further combined with the manner 1 to the manner 5. A specific combination manner is not described herein again.

In the foregoing manner 6 to manner 9, a time at which a mapping relationship on a current link is established can also be accurately indicated when a mapping relationship is determined based on a time of a TBTT on another link.

The following describes communication apparatuses provided in embodiments of this application.

In this application, the communication apparatus is divided into functional modules based on the foregoing method embodiments. For example, functional modules corresponding to functions may be obtained through division, or two or more functions may be integrated into one processing module. The integrated module may be implemented in a form of hardware, or may be implemented in a form of a software functional module. It should be noted that, in this application, module division is an example, and is merely logical function division. During actual implementation, another division manner may be used. The following describes in detail communication apparatuses in embodiments of this application with reference to FIG. 9 to FIG. 11.

FIG. 9 is a diagram of a structure of a communication apparatus according to an embodiment of this application. As shown in FIG. 9, the communication apparatus includes a processing unit 901 and a transceiver unit 902. The transceiver unit 902 may implement a corresponding communication function, and the processing unit 901 is configured to perform data processing. The transceiver unit 902 may also be referred to as a communication interface, a communication unit, or the like.

In some embodiments of this application, the communication apparatus may be configured to perform an action performed by the transmit end in the foregoing method embodiments. In this case, the communication apparatus may be the transmit end or a component (for example, a chip or a system) that can be disposed in the transmit end. The transceiver unit 902 is configured to perform a receiving/sending-related operation of the transmit end in the foregoing method embodiments. The processing unit 901 is configured to perform a processing-related operation of the transmit end in the foregoing method embodiments.

In some embodiments of this application, the communication apparatus may be the transmit end or the chip shown above, and the chip may be disposed in the transmit end. In other words, the communication apparatus may be configured to perform a step, a function, or the like performed by the transmit end in the method embodiments (including the manner 1 to the manner 9).

The processing unit 901 is configured to generate a radio frame. The transceiver unit 902 is configured to output the radio frame.

Optionally, the communication apparatus may further include a storage unit. The storage unit may be configured to store instructions and/or data. The processing unit 901 may read the instructions and/or data in the storage unit, to enable the communication apparatus to implement the foregoing method embodiments.

In some other embodiments of this application, the communication apparatus may be configured to perform an action performed by the receive end in the foregoing method embodiments. In this case, the communication apparatus may be the receive end or a component that can be disposed in the receive end. The transceiver unit 902 is configured to perform a receiving/sending-related operation of the receive end in the foregoing method embodiments. The processing unit 901 is configured to perform a processing-related operation of the receive end in the foregoing method embodiments. In other words, the communication apparatus may be configured to perform a step, a function, or the like performed by the receive end in the method embodiments (including the manner 1 to the manner 9).

The transceiver unit 902 is configured to input a radio frame. The processing unit 901 is configured to parse the radio frame.

It may be understood that, for specific descriptions of parsing the radio frame by the processing unit 901, refer to the foregoing method embodiment. Details are not described herein.

Optionally, the communication apparatus may further include a storage unit. The storage unit may be configured to store instructions and/or data. The processing unit 901 may read the instructions and/or data in the storage unit, to enable the communication apparatus to implement the foregoing method embodiments.

It may be understood that specific descriptions of the transceiver unit and the processing unit described in embodiments of this application are merely examples. For specific functions, performed steps, or the like of the transceiver unit and the processing unit, refer to the foregoing method embodiments. Details are not described herein.

For descriptions of the radio frame, the mapping switch time field, the expected duration field, the first element, the second element, and the like in the foregoing embodiments, refer to the descriptions in the foregoing method embodiments. Details are not described herein.

The foregoing describes the communication apparatus in embodiments of this application. The following describes a possible product form of the communication apparatus. It should be understood that any product in any form having the function of the communication apparatus described in FIG. 9 falls within the protection scope of embodiments of this application. It should be further understood that the following description is merely an example, and does not limit a product form of the communication apparatus in embodiments of this application.

In a possible implementation, in the communication apparatus shown in FIG. 9, the processing unit 901 may be one or more processors. The transceiver unit 902 may be a transceiver, or the transceiver unit 902 may be a sending unit and a receiving unit. The sending unit may be a transmitter, and the receiving unit may be a receiver. The sending unit and the receiving unit are integrated into one component, for example, a transceiver. In this embodiment of this application, the processor and the transceiver may be coupled, or the like. A manner of connection between the processor and the transceiver is not limited in embodiments of this application. In a process of performing the foregoing method, an information sending process in the foregoing method may be understood as a process of outputting the foregoing information by the processor. When outputting the foregoing information, the processor outputs the foregoing information to a transceiver, so that the transceiver transmits the information. After the information is output by the processor, other processing may further need to be performed on the information before the information arrives at the transceiver. Similarly, an information receiving process in the foregoing method may be understood as a process of receiving the foregoing input information by the processor. When the processor receives the input information, the transceiver receives the foregoing information, and inputs the foregoing information into the processor. Further, after the transceiver receives the foregoing information, other processing may need to be performed on the foregoing information before the foregoing information is input into the processor.

As shown in FIG. 10, a communication apparatus 100 includes one or more processors 1020 and a transceiver 1010.

In some embodiments of this application, the communication apparatus may be configured to perform a step, a function, or the like performed by the transmit end in the method embodiments (including the manner 1 to the manner 9).

The processor 1020 is configured to generate a radio frame. The transceiver 1010 is configured to send the radio frame.

For example, the transceiver 1010 is further configured to receive an acknowledgment frame.

In some other embodiments of this application, the communication apparatus may be configured to perform a step, a function, or the like performed by the receive end in the method embodiments (including the manner 1 to the manner 9).

The transceiver 1010 is configured to receive a radio frame. The processor 1020 is configured to parse the radio frame.

It may be understood that specific descriptions of the transceiver and the processor described in embodiments of this application are merely examples. For specific functions, performed steps, or the like of the transceiver and the processor, refer to the foregoing method embodiments. Details are not described herein.

For descriptions of the radio frame, the mapping switch time field, the expected duration field, the first element, the second element, and the like in the foregoing embodiments, refer to the descriptions in the foregoing method embodiments. Details are not described herein.

In each implementation of the communication apparatus shown in FIG. 10, the transceiver may include a receiver and a transmitter. The receiver is configured to perform a receiving function (or operation), and the transmitter is configured to perform a transmitting function (or operation). The transceiver is configured to communicate with another device/apparatus through a transmission medium.

Optionally, the communication apparatus 100 may further include one or more memories 1030, configured to store program instructions and/or data. The memory 1030 is coupled to the processor 1020. Coupling in this embodiment of this application may be indirect coupling or a communication connection between apparatuses, units, or modules, may be in an electrical form, a mechanical form, or another form, and is used for information exchange between the apparatuses, the units, or the modules. The processor 1020 may cooperate with the memory 1030. The processor 1020 may execute the program instructions stored in the memory 1030. Optionally, at least one of the one or more memories may be included in the processor.

A specific connection medium between the transceiver 1010, the processor 1020, and the memory 1030 is not limited in embodiments of this application. In this embodiment of this application, in FIG. 10, the memory 1030, the processor 1020, and the transceiver 1010 are connected to each other through a bus 1040. The bus is indicated by a thick line in FIG. 10. A manner of connection between other components is merely described as an example, but is not limited thereto. The bus may be classified into an address bus, a data bus, a control bus, or the like. For ease of representation, the bus is represented by only one thick line in FIG. 10. However, this does not mean that there is only one bus or one type of bus.

In this embodiment of this application, the processor may be a general-purpose processor, a digital signal processor, an application-specific integrated circuit, a field-programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the methods disclosed with reference to embodiments of this application may be directly performed and accomplished by a hardware processor, or may be performed and accomplished by using a combination of hardware and software modules in the processor.

In this embodiment of this application, the memory may include but is not limited to a nonvolatile memory, for example, a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a compact disc read-only memory (Compact Disc Read-Only Memory, CD-ROM). The memory is any storage medium that can be used to carry or store program code in a form of an instruction or a data structure and that can be read and/or written by a computer (for example, the communication apparatus described in this application), but is not limited thereto. The memory in embodiments of this application may alternatively be a circuit or any other apparatus that can implement a storage function, and is configured to store the program instructions and/or the data.

For example, the processor 1020 is mainly configured to process a communication protocol and communication data, control the entire communication apparatus, execute a software program, and process data of the software program. The memory 1030 is mainly configured to store the software program and data. The transceiver 1010 may include a control circuit and an antenna. The control circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user.

After the communication apparatus is powered on, the processor 1020 may read the software program in the memory 1030, interpret and execute instructions of the software program, and process data of the software program. When data needs to be sent wirelessly, the processor 1020 performs baseband processing on the to-be-sent data, and then outputs a baseband signal to a radio frequency circuit. The radio frequency circuit performs radio frequency processing on the baseband signal, and then sends a radio frequency signal in a form of an electromagnetic wave through the antenna. When data is sent to the communication apparatus, the radio frequency circuit receives the radio frequency signal through the antenna, converts the radio frequency signal into a baseband signal, and outputs the baseband signal to the processor 1020. The processor 1020 converts the baseband signal into data and processes the data.

In another implementation, the radio frequency circuit and the antenna may be disposed independently of the processor that performs baseband processing. For example, in a distributed scenario, the radio frequency circuit and the antenna may be disposed remotely and independently of the communication apparatus.

It may be understood that the communication apparatus described in embodiments of this application may further have more components than those shown in FIG. 10, and the like. This is not limited in embodiments of this application. The foregoing methods performed by the processor and the transceiver are merely examples. For specific steps performed by the processor and the transceiver, refer to the methods described above.

In another possible implementation, in the communication apparatus shown in FIG. 9, the processing unit 901 may be one or more logic circuits, and the transceiver unit 902 may be an input/output interface that is also referred to as a communication interface, an interface circuit, an interface, or the like. Alternatively, the transceiver unit 902 may be a sending unit and a receiving unit. The sending unit may be an output interface, and the receiving unit may be an input interface. The sending unit and the receiving unit are integrated into one unit, for example, an input/output interface. As shown in FIG. 11, a communication apparatus shown in FIG. 11 includes a logic circuit 1101 and an interface 1102. In other words, the processing unit 901 may be implemented through the logic circuit 1101, and the transceiver unit 902 may be implemented through the interface 1102. The logic circuit 1101 may be a chip, a processing circuit, an integrated circuit, a system on chip (system on chip, SoC), or the like. The interface 1102 may be a communication interface, an input/output interface, a pin, or the like. For example, FIG. 11 is an example in which the communication apparatus is a chip. The chip includes the logic circuit 1101 and the interface 1102.

In embodiments of this application, the logic circuit and the interface may be further coupled to each other. A specific manner of connection between the logical circuit and the interface is not limited in embodiments of this application.

In some embodiments of this application, the communication apparatus may be configured to perform a step, a function, or the like performed by the transmit end in the method embodiments (including the manner 1 to the manner 9).

The logic circuit 1101 is configured to generate a radio frame. The interface 1102 is configured to output the radio frame.

In some other embodiments of this application, the communication apparatus may be configured to perform a step, a function, or the like performed by the receive end in the method embodiments (including the manner 1 to the manner 9).

The interface 1102 is configured to input a radio frame. The logic circuit 1101 is configured to parse the radio frame.

It may be understood that specific descriptions of the logic circuit and the interface described in embodiments of this application are merely examples. For specific functions, performed steps, or the like of the logic circuit and the interface, refer to the foregoing method embodiments. Details are not described herein.

For descriptions of the radio frame, the mapping switch time field, the expected duration field, the first element, the second element, and the like in the foregoing embodiments, refer to the descriptions in the foregoing method embodiments. Details are not described herein.

It may be understood that the communication apparatus described in this embodiment of this application may implement the method provided in embodiments of this application in a form of hardware or in a form of software. This is not limited in embodiments of this application.

An embodiment of this application further provides a wireless communication system. The wireless communication system includes a transmit end and a receive end. The transmit end and the receive end may be configured to perform the method in any of the foregoing embodiments.

In addition, this application further provides a computer program. The computer program is used to implement an operation and/or processing performed by the transmit end in the method provided in this application.

This application further provides a computer program. The computer program is used to implement an operation and/or processing performed by the receive end in the method provided in this application.

This application further provides a computer-readable storage medium. The computer-readable storage medium stores computer code. When the computer code is run on a computer, the computer is enabled to perform an operation and/or processing performed by the transmit end in the method provided in this application.

This application further provides a computer-readable storage medium. The computer-readable storage medium stores computer code. When the computer code is run on a computer, the computer is enabled to perform an operation and/or processing performed by the receive end in the method provided in this application.

This application further provides a computer program product. The computer program product includes computer code or a computer program. When the computer code or the computer program is run on a computer, an operation and/or processing performed by the transmit end in the method provided in this application are/is performed.

This application further provides a computer program product. The computer program product includes computer code or a computer program. When the computer code or the computer program is run on a computer, an operation and/or processing performed by the receive end in the method provided in this application are/is performed.

In the several embodiments provided in this application, it should be understood that the disclosed system, apparatus, and method may be implemented in other manners. For example, the described apparatus embodiments are merely examples. For example, division into the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located at one location, or may be distributed on a plurality of network units. Some or all of the units may be selected based on an actual requirement to achieve the technical effect of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The readable storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A multi-link communication method, wherein the method comprises:
generating a radio frame, wherein the radio frame comprises a first traffic identifier-to-link mapping element and a second traffic identifier-to-link mapping element; the first traffic identifier-to-link mapping element comprises an expected duration field; the expected duration field indicates an expected end time of a traffic identifier-to-link mapping relationship indicated by the first traffic identifier-to-link mapping element; the expected duration field is determined based on a most recent target beacon transmission time TBTT before a transmission time of the radio frame, determined based on a target beacon transmission time TBTT at which a transmission time of the radio frame is, or determined based on a time synchronization function TSF timer; the second traffic identifier-to-link mapping element comprises a mapping switch time field; the mapping switch time field indicates a time at which a new traffic identifier-to-link mapping relationship indicated by the second traffic identifier-to-link mapping element is established; and the expected end time of the traffic identifier-to-link mapping relationship indicated by the first traffic identifier-to-link mapping element is the same as the time at which the new traffic identifier-to-link mapping relationship indicated by the second traffic identifier-to-link mapping element is established; and
sending the radio frame.

2. The method according to claim 1, wherein a value carried in the expected duration field is the same as any one of the following:
a value of an 11^{th} bit to a 26^{th} bit of the TSF timer;
a value of an 11^{th} bit to a 34^{th} of the TSF timer; or
a value of an 11^{th} bit to a 50^{th} bit of the TSF timer.

3. The method according to claim 1 or 2, wherein the first traffic identifier-to-link mapping element is located before the second traffic identifier-to-link mapping element in the radio frame.

4. A multi-link communication method, wherein the method comprises:
receiving a radio frame, wherein the radio frame comprises a first traffic identifier-to-link mapping element and a second traffic identifier-to-link mapping element; the first traffic identifier-to-link mapping element comprises an expected duration field; the expected duration field indicates an expected end time of a traffic identifier-to-link mapping relationship indicated by the first traffic identifier-to-link mapping element; the expected duration field is determined based on a most recent target beacon transmission time TBTT before a transmission time of the radio frame, determined based on a target beacon transmission time TBTT at which a transmission time of the radio frame is, or determined based on a time synchronization function TSF timer; the second traffic identifier-to-link mapping element comprises a mapping switch time field; the mapping switch time field indicates a time at which a new traffic identifier-to-link mapping relationship indicated by the second traffic identifier-to-link mapping element is established; and the expected end time of the traffic identifier-to-link mapping relationship indicated by the first traffic identifier-to-link mapping element is the same as the time at which the new traffic identifier-to-link mapping relationship indicated by the second traffic identifier-to-link mapping element is established; and
parsing the radio frame.

5. The method according to claim 4, wherein the parsing the radio frame comprises:
determining, by using the most recent TBTT before the transmission time of the radio frame as a starting point and using a value carried in the expected duration field as remaining duration, the expected end time of the traffic identifier-to-link mapping relationship indicated by the first traffic identifier-to-link mapping element; or
using a value carried in the expected duration field as the expected end time of the traffic identifier-to-link mapping relationship indicated by the first traffic identifier-to-link mapping element.

6. A multi-link communication method, wherein the method comprises:
generating a radio frame, wherein the radio frame comprises a first traffic identifier-to-link mapping element and a second traffic identifier-to-link mapping element; the first traffic identifier-to-link mapping element does not comprise an expected duration field, the second traffic identifier-to-link mapping element comprises a mapping switch time field, and the mapping switch time field indicates a time at which a new traffic identifier-to-link mapping relationship indicated by the second traffic identifier-to-link mapping element is established and an expected end time of a traffic identifier-to-link mapping relationship indicated by the first traffic identifier-to-link mapping element; or the first traffic identifier-to-link mapping element comprises an expected duration field, the second traffic identifier-to-link mapping element does not comprise a mapping switch time field, and the expected duration field indicates an expected end time of a traffic identifier-to-link mapping relationship indicated by the first traffic identifier-to-link mapping element and a time at which a new traffic identifier-to-link mapping relationship indicated by the second traffic identifier-to-link mapping element is established; and
sending the radio frame.

7. A multi-link communication method, wherein the method comprises:
receiving a radio frame, wherein the radio frame comprises a first traffic identifier-to-link mapping element and a second traffic identifier-to-link mapping element; the first traffic identifier-to-link mapping element does not comprise an expected duration field, the second traffic identifier-to-link mapping element comprises a mapping switch time field, and the mapping switch time field indicates a time at which a new traffic identifier-to-link mapping relationship indicated by the second traffic identifier-to-link mapping element is established and an expected end time of a traffic identifier-to-link mapping relationship indicated by the first traffic identifier-to-link mapping element; or the first traffic identifier-to-link mapping element comprises an expected duration field, the second traffic identifier-to-link mapping element does not comprise a mapping switch time field, and the expected duration field indicates an expected end time of a traffic identifier-to-link mapping relationship indicated by the first traffic identifier-to-link mapping element and a time at which a new traffic identifier-to-link mapping relationship indicated by the second traffic identifier-to-link mapping element is established; and
parsing the radio frame.

8. The method according to claim 7, wherein the parsing the radio frame comprises:
when the first traffic identifier-to-link mapping element does not comprise the expected duration field and the second traffic identifier-to-link mapping element comprises the mapping switch time field, determining, based on the mapping switch time field, the expected end time of the traffic identifier-to-link mapping relationship indicated by the first traffic identifier-to-link mapping element, wherein the expected end time of the traffic identifier-to-link mapping relationship indicated by the first traffic identifier-to-link mapping element is the same as the time at which the new traffic identifier-to-link mapping relationship indicated by the second traffic identifier-to-link mapping element is established; or
when the first traffic identifier-to-link mapping element comprises the expected duration field and the second traffic identifier-to-link mapping element does not comprise the mapping switch time field, determining, based on the expected duration field, the time at which the new traffic identifier-to-link mapping relationship indicated by the second traffic identifier-to-link mapping element is established, wherein the expected end time of the traffic identifier-to-link mapping relationship indicated by the first traffic identifier-to-link mapping element is the same as the time at which the new traffic identifier-to-link mapping relationship indicated by the second traffic identifier-to-link mapping element is established.

9. A multi-link communication method, wherein the method comprises:
receiving a radio frame, wherein the radio frame comprises a first traffic identifier-to-link mapping element and a second traffic identifier-to-link mapping element, the first traffic identifier-to-link mapping element comprises an expected duration field, the expected duration field indicates an expected end time of a traffic identifier-to-link mapping relationship indicated by the first traffic identifier-to-link mapping element, the second traffic identifier-to-link mapping element comprises a mapping switch time field, and the mapping switch time field indicates a time at which a new traffic identifier-to-link mapping relationship indicated by the second traffic identifier-to-link mapping element is established; and
determining, based on the expected duration field, the time at which the new traffic identifier-to-link mapping relationship indicated by the second traffic identifier-to-link mapping element is established; or determining, based on the mapping switch time field, the expected end time of the traffic identifier-to-link mapping relationship indicated by the first traffic identifier-to-link mapping element.

10. The method according to claim 9, wherein the determining, based on the mapping switch time field, the expected end time of the traffic identifier-to-link mapping relationship indicated by the first traffic identifier-to-link mapping element comprises:
when the expected end time of the traffic identifier-to-link mapping relationship indicated by the first traffic identifier-to-link mapping element is later than the time at which the new traffic identifier-to-link mapping relationship indicated by the second traffic identifier-to-link mapping element is established, determining, based on the mapping switch time field, the expected end time of the traffic identifier-to-link mapping relationship indicated by the first traffic identifier-to-link mapping element, wherein the expected end time of the traffic identifier-to-link mapping relationship indicated by the first traffic identifier-to-link mapping element is equal to the time at which the new traffic identifier-to-link mapping relationship indicated by the second traffic identifier-to-link mapping element is established.

11. A multi-link communication method, wherein the method comprises:
generating a radio frame, wherein the radio frame comprises a traffic identifier-to-link mapping element; the traffic identifier-to-link mapping element comprises a mapping switch time field and a first field; the mapping switch time field indicates a time at which a traffic identifier-to-link mapping relationship indicated by the traffic identifier-to-link mapping element is established; the time is determined based on a first target beacon time TBTT on a first link; the first field indicates a time difference between the first TBTT on the first link and a time point that is on a second link and that corresponds to the first TBTT; the time point is not later than the first TBTT and is a time point that is on the second link and that is closest to the first TBTT, and a value of 10 least significant bits of a time synchronization function TSF timer of the time point is 0; or the time point is a TBTT on the second link; and
sending the radio frame through the second link.

12. The method according to claim 11, wherein the traffic identifier-to-link mapping element further comprises a second field, and the second field indicates presence of the first field.

13. The method according to claim 11 or 12, wherein a value carried in the first field is a value of a first bit to a tenth bit of the time synchronization function TSF timer of a basic service set BSS corresponding to the second link.

14. A multi-link communication method, wherein the method comprises:
receiving a radio frame through a second link, wherein the radio frame comprises a traffic identifier-to-link mapping element; the traffic identifier-to-link mapping element comprises a mapping switch time field and a first field; the mapping switch time field indicates a time at which a traffic identifier-to-link mapping relationship indicated by the traffic identifier-to-link mapping element is established; the time is determined based on a first target beacon time TBTT on a first link; the first field indicates a time difference between the first TBTT on the first link and a time point that is on the second link and that corresponds to the first TBTT; the time point is not later than the first TBTT and is a time point that is on the second link and that is closest to the first TBTT, and a value of 10 least significant bits of a time synchronization function TSF timer of the time point is 0; or the time point is a TBTT on the second link; and
parsing the radio frame.

15. The method according to claim 14, wherein the parsing the radio frame comprises:
determining, based on the first field and the time indicated by the mapping switch time field, a time at which a traffic identifier-to-link mapping relationship corresponding to the second link is established.

16. A multi-link communication method, wherein the method comprises:
generating a radio frame, wherein the radio frame comprises a traffic identifier-to-link mapping element, the traffic identifier-to-link mapping element comprises a mapping switch time field, the mapping switch time field indicates a time at which a traffic identifier-to-link mapping relationship indicated by the traffic identifier-to-link mapping element is established, and time precision of the time is microsecond; and
sending the radio frame.

17. The method according to claim 16, wherein the traffic identifier-to-link mapping element further comprises a length field, the length field indicates a length of the mapping switch time field, and the time precision of the time is microsecond when a value carried in the length field is a first value.

18. A multi-link communication method, wherein the method comprises:
receiving a radio frame, wherein the radio frame comprises a traffic identifier-to-link mapping element, the traffic identifier-to-link mapping element comprises a mapping switch time field, the mapping switch time field indicates a time at which a traffic identifier-to-link mapping relationship indicated by the traffic identifier-to-link mapping element is established, and time precision of the time is microsecond; and
parsing the radio frame.

19. The method according to claim 18, wherein the parsing the radio frame comprises:
determining, based on a value carried in the mapping switch time field, the time at which the traffic identifier-to-link mapping relationship is established.

20. The method according to claim 1 or 2, wherein the method further comprises:
when the transmission time of the radio frame is at the TBTT, the expected duration field is determined based on the transmission time of the radio frame.

21. A communication apparatus, comprising a unit configured to perform the method according to any one of claims 1 to 20.

22. A communication apparatus, comprising a processor and a memory, wherein
the memory is configured to store instructions; and
the processor is configured to execute the instructions, to perform the method according to any one of claims 1 to 20.

23. A communication apparatus, comprising a logic circuit and an interface, wherein the logic circuit is coupled to the interface; and
the interface is configured to input and/or output code instructions, and the logic circuit is configured to execute the code instructions, to perform the method according to any one of claims 1 to 20.

24. A computer-readable storage medium, wherein the computer-readable storage medium is configured to store a computer program, and when the computer program is executed, the method according to any one of claims 1 to 20 is performed.

25. A computer program, wherein when the computer program is executed, the method according to any one of claims 1 to 20 is performed.

26. A communication system, wherein the communication system comprises a transmit end and a receive end, the transmit end is configured to perform the method according to any one of claims 1 to 3, and the receive end is configured to perform the method according to claim 4 or 5; the transmit end is configured to perform the method according to claim 6, and the receive end is configured to perform the method according to claim 7 or 8; the receive end is configured to perform the method according to claim 9 or 10; the transmit end is configured to perform the method according to any one of claims 11 to 13, and the receive end is configured to perform the method according to claim 14 or 15; or the transmit end is configured to perform the method according to claim 16 or 17, and the receive end is configured to perform the method according to claim 18 or 19.
